(19) Europäisches Patentamt
European Patent Office
Office européen des brevets

(11) EP 1 453 926 B1

(12) **EUROPÄISCHE PATENTSCHRIFT**

(45) Veröffentlichungstag und Bekanntmachung des Hinweises auf die Patenterteilung:
**03.01.2007 Patentblatt 2007/01**

(21) Anmeldenummer: **02772378.2**

(22) Anmeldetag: **14.10.2002**

(51) Int Cl.:
***C09J 7/02*** *(2006.01)* ***B26F 1/40*** *(2006.01)*

(86) Internationale Anmeldenummer:
**PCT/EP2002/011461**

(87) Internationale Veröffentlichungsnummer:
**WO 2003/044116 (30.05.2003 Gazette 2003/22)**

(54) **VERFAHREN ZUR HERSTELLUNG HAFTKLEBRIGER STANZPRODUKTE**

METHOD FOR THE PRODUCTION OF ADHESIVE STAMPED PRODUCTS

PROCEDE DE PRODUCTION D'ARTICLES DECOUPES ADHESIFS

(84) Benannte Vertragsstaaten:
**DE ES FR GB IT**

(30) Priorität: **22.11.2001 DE 10157153**

(43) Veröffentlichungstag der Anmeldung:
**08.09.2004 Patentblatt 2004/37**

(73) Patentinhaber: **tesa AG**
**20253 Hamburg (DE)**

(72) Erfinder:
- **HUSEMANN, Marc**
  **22605 Hamburg (DE)**
- **KLOSE, Maren**
  **21217 Seevetal (DE)**
- **KOCH, Matthias**
  **20259 Hamburg (DE)**
- **STORBECK, Reinhard**
  **22457 Hamburg (DE)**

(56) Entgegenhaltungen:
**WO-A-02/34854** **US-A- 5 866 249**

EP 1 453 926 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft ein Verfahren zur Herstellung von Stanzprodukten sowie derart erhältliche Stanzprodukte.

Alle heute bekannten Haftklebemassen zeichnen sich durch ein mehr oder weniger ausgeprägtes Fließverhalten aus. Dieses Fließverhalten ist bei starker Ausprägung auch als kalter Fluß oder als Ausbluten eines Haftklebstoffes bekannt. Dieses inhärente Verhalten einer Haftklebemasse führt zu Problemen beim Stanzen von selbstklebenden Materialien. Die beiden gängigen Stanzverfahren, das Flachbettstanzverfahren und das rotative Stanzverfahren sind von diesen Problemen betroffen. So können beispielsweise beim Abgittem Stanzlinge mitgerissen werden, da durch den Kalten Fluß eines Haftklebers keine saubere Trennung der Haftklebemasse möglich ist. Erfolgt der Abgitterprozeß nach dem Stanzprozeß manuell, wie beispielsweise in Asien, so verschärfen sich diese Probleme nochmals, da der Kleber jetzt ausreichend Zeit zur Verfügung hat zusammenzufließen.

Ein weiteres Problem tritt im Anstanzverfahren auf. Beim Anstanzen von selbstklebenden Materialien wird das Trennmaterial mitangestanzt, d.h. die Stanzmesser dringen bis zu einer mehr oder weniger definierten Tiefe in das Substratmaterial (= Trennmaterial) ein. Dadurch wird immer die antiadhäsiv ausgerüstete Oberfläche des Trennmaterials (in den meisten Fällen sind die Trennmaterialien silikonisiert, gilt für alle beschriebenen Trennsysteme, Satas, 3.Auflage, Kapitel 26 und 27) zerstört. Der Kleber kann in das Substratmaterial des Trennmaterials (Papier, PET, PP, PE) hineinfließen und haften. Der Stanzling läßt sich nicht mehr problemlos vom silikonisierten Trennmaterial abziehen, da die Kanten des Stanzlings mit dem Substrat verklebt sind. In einem nachfolgenden Verarbeitungsschritt, wie beispielsweise der automatischen Dispensierung, kann der Stanzling, oder das zu entfernende Matrixgitter um die Stanzlinge herum, beim Abziehen reißen. Diese Abrisse führen heute zu massiven Produktionsstörungen führen. Die beschriebenen Effekte gelten für alle Produktaufbauten wie Transferklebebänder sowie für einseitig und beidseitig beschichtete Substrate wie z.B. Folien, Vliese, Papiere, Gelege oder Schäume.

Aus der nur zur Beurteilung der Neuheit dienenden WO 02/34854 A ist bekannt, für die Herstellung von Stanzprodukten eine Haftklebemasse zu verwenden, die anisotrope Eigenschaften besitzt und ein- oder beidseitig auf ein Trägermaterial aufgetragen wird. Die konkrete Durchführung des Stanzverfahrens wird dort aber nicht näher beschrieben.

Aufgabe der Erfindung ist es daher, die Herstellung von Stanzprodukten zu verbessern, indem die geschilderten Nachteile des Standes der Technik vermieden oder aber zumindest erheblich vermindert werden.

Gelöst wird die Aufgabe überraschend und für den Fachmann in nicht vorhersehbarer Weise durch den Einsatz anisotroper Haftklebemassen in dem Stanzverfahren. Dementsprechend betrifft der Hauptanspruch ein Verfahren zur Herstellung von haftklebrigen Stanzlingen aus mit Haftklebemasse ausgerüsteten Trägermaterial, bei welchem als Haftklebemasse eine solche eingesetzt wird, die anisotrop ist, indem sie eine Vorzugsrichtung besitzt, und bei welchem weiterhin der Stanzprozeß diskontinuierlich durchgeführt wird. Die Unteransprüche betreffen bevorzugte Weiterentwicklungen dieses Verfahrens.

<u>Haftklebemassen</u>

Anisotrope Haftklebemassen, welche sich für das erfinderische Verfahren setzten lassen, werden im folgenden auch als anisotrop orientierte oder als orientierte Haftklebemassen bezeichnet.

Anisotrop orientierte Haftklebemassen besitzen die Tendenz, sich nach einer Streckung in eine vorgegebene Richtung durch das ‚entropieelastische Verhalten' in den Ausgangszustand zurückzubewegen.

Für das erfinderische Verfahren sind prinzipiell alle Haftklebemassen geeignet, die eine Orientierung aufweisen, beispielsweise solche auf Basis von Natur- und Synthesekautschuken wie Butylkautschuk, Neopren, Butadien-Acrylnitril, Styrol-Butadien-Styrol- und Styrol-Isopren-Styrol-Copolymerisaten, ferner auf Basis von linearen Polyestern und Copolyestern, Polyurethanen, Polysiloxanelastomeren, auf Basis von Acrylatblockcopolymeren, insbesondere solchen mit Di- und/oder Triblöcken, bei welchen zumindest eine Blockkomponente auf Polyacrylaten beruht, weiterhin Haftklebemassen auf Basis von Reinacrylaten, ganz besonders vorteilhaft aber anisotrope Haftklebemassen auf Polyacrylat- und/oder Polymethacrylatbasis.

Solche anisotrop orientierten Acrylathaftklebemasssen zeigen überraschend als Schicht nach Stanz- und/oder Schneidvorgängen eine Rückstellung der Haftklebeschicht an der Schneid- und Stanzkante, welche erfinderisch für das Ausstanzen nicht wieder zusammenfließender Stanzformen genutzt wird. Diese Eigenschaft ist für keine der bisher zum Stand der Technik gehörigen Haftklebemassen bekannt. (In Fig. 1 ist eine Kante solch eines Stanzlings nach dem Stanzprozeß zu sehen. Man erkennt die durch anisotrope Orientierung verursachte Rückstellung der Haftklebemasse).

Die Monomere werden bevorzugt dermaßen gewählt, daß die resultierenden Polymere bei Raumtemperatur oder höheren Temperaturen als Haftklebemassen eingesetzt werden können, insbesondere derart, daß die resultierenden Polymere haftklebende Eigenschaften entsprechend des "Handbook of Pressure Sensitive Adhesive Technology" von Donatas Satas (van Nostrand, New York 1989) besitzen.

Die Polymere, welche für das erfinderische Verfahren bevorzugt eingesetzt werden, lassen sich bevorzugt durch Polymerisation einer Monomermischung gewinnen, welche sich aus Acrylsäureestem und/oder Methacrylsäureestern und/oder deren freien Säuren mit der Formel $CH_2 = CH(R_1)(COOR_2)$ zusammensetzt, wobei $R_1$ = H oder $CH_3$ und $R_2$ eine Alkylkette mit 1 - 20 C-Atomen oder H ist.

Die Molmassen $M_w$ der eingesetzten Polyacrylate betragen bevorzugt $M_w \geq 200.000$ g/mol.

In einer sehr bevorzugten Weise werden für das erfinderische Verfahren Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat. Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer Vorgehensweise werden Monomere eingesetzt, die polare Gruppen wie Carboxylreste, Sulfon-und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere sind z.B. N,N-Dialkylsubstituierte Amide, wie z.B. N,N-Dimethylacrylamid, N, N-Dimethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in $\alpha$-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren sehr bevorzugten Vorgehensweise Photoinitiatoren mit einer copolymerisierbaren Doppelbindung eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Weiterhin können für das erfinderische Verfahren orientierte Blockcopolymere auf Acrylat- und/oder Methacrylatbasis eingesetzt werden. Insbesondere seien hier beispielhaft solche Haftklebemassen auf Basis von zumindest einem Blockcopolymer erwähnt, wobei die Gewichtsanteile der Blockcopolymere in Summe zumindest 50 % der Haftklebemasse ausmachen, wobei zumindest ein Blockcopolymer zumindest teilweise auf Basis von (Meth-)Acrylsäurederivaten zusammengesetzt ist, wobei weiterhin zumindest ein Blockcopolymer mindestens die Einheit P(A)-P(B)-P(A) aus wenigstens einem Polymerblock P(B) und wenigstens zwei Polymerblöcken P(A) aufweist und wobei

- P(A) unabhängig voneinander Homo- oder Copolymerblöcke aus Monomeren A repräsentieren, wobei die Polymerblöcke P(A) jeweils eine Erweichungstemperatur im Bereich von + 20 °C bis + 175 °C aufweisen,
- P(B) einen Homo- oder Copolymerblock aus Monomeren B repräsentiert, wobei der Polymerblock P(B) eine Erweichungstemperatur im Bereich von - 130 °C bis + 10 °C aufweist,
- die Polymerblöcke P(A) und P(B) nicht homogen miteinander mischbar sind, und

- das haftklebende System orientiert ist, indem es eine Vorzugsrichtung besitzt,

wobei der in Vorzugsrichtung gemessene Brechungsindex $n_{MD}$ größer ist als der in einer Richtung senkrecht zur Vorzugsrichtung gemessene Brechungsindex $n_{CD}$.

In sehr vorteilhafter Vorgehensweise wird bei dem erfinderischen Verfahren eine orientierte Haftklebemasse eingesetzt, welche ein Rückschrumpfverhalten aufweist, wobei der Rückschrumpf über eine Bestimmung nach Test B (Rückschrumpfmessung im freien Film) mindestens 3 % beträgt. In einer Weiterentwicklung des erfinderischen Verfahrens werden Haftklebemassen eingesetzt, bei welchen der Rückschrumpf mindestens 30 %, in einer bevorzugten Ausführung mindestens 50 % beträgt.

Bevorzugt eingesetzte Haftklebemassen zeichnen sich dadurch aus, daß der in Vorzugsrichtung gemessene Brechungsindex $n_{VR}$ größer ist als der in einer Richtung senkrecht zur Vorzugsrichtung gemessene Brechungsindex $n_{SR}$. Der Brechungsindex n eines Mediums ist gegeben über den Quotienten aus der Lichtgeschwindigkeit $C_0$ im Vakuum und der Lichtgeschwindigkeit c in dem betrachteten Medium ($n = c_0/c$), n ist eine Funktion der Wellenlänge des jeweiligen Lichts. Als Maß für die Orientierung der Haftklebemasse dient die Differenz $\Delta n$ des in eine Vorzugsrichtung (Verstrekkungsrichtung VR) gemessenen Brechungsindex $n_{VR}$ und des in einer Richtung senkrecht zur Vorzugsrichtung (SR) gemessenen Brechungsindex $n_{SR}$, also $\Delta n = n_{VR} - n_{SR}$, dieser Wert ist durch die in Test C beschriebenen Messungen zugänglich.

Sehr bevorzugt werden Haftklebemassen für das erfinderische Verfahren eingesetzt, bei welchen die Differenz $\Delta n = n_{VR} - n_{SR}$ mindestens $1 \cdot 10^{-5}$ beträgt.

Zur Weiterentwicklung können den Polyacrylathaftklebemassen Harze beigemischt sein. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im „Handbook of Pressure Sensitive Adhesive Technology" von Donatas Satas (van Nostrand, 1989) sei ausdrücklich hingewiesen.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z.B. in Form von primären und sekundären Antioxidantien oder in Form von Lichtschutzmitteln zugesetzt sein.

Zusätzlich können Vernetzer und Promotoren zur Vernetzung beigemischt werden. Geeignete Vernetzer für die Elektronenstrahlvernetzung und UV-Vemetzung sind beispielsweise bi- oder multifunktionelle Acrylate, bi- oder multifunktionelle Isocyanate (auch in blockierter Form) oder bi- oder multifunktionelle Epoxide.

Zu einer optionalen Vernetzung mit UV-Licht können den Polyacrylathaftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Herstellverfahren für vorteilhaft eingesetzte Haftklebemassen

Zur Polymerisation werden die Monomere dermaßen gewählt, daß die resultierenden Polymere bei Raumtemperatur oder höheren Temperaturen als Haftklebemassen eingesetzt werden können, insbesondere derart, daß die resultierenden Polymere haftklebende Eigenschaften entsprechend des „Handbook of Pressure Sensitive Adhesive

Technology" von Donatas Satas (van Nostrand, New York 1989) besitzen.
Zur Erzielung einer bevorzugten Glasübergangstemperatur $T_G$ der Polymere von $T_G \leq 25$ °C werden entsprechend dem vorstehend gesagten die Monomere sehr bevorzugt derart ausgesucht und die mengenmäßige Zusammensetzung der Monomermischung vorteilhaft derart gewählt, daß sich nach der ***Fox***-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.
Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Die mittleren Molekulargewichte $M_W$ der bei der radikalischen Polymerisation entstehenden Haftklebemassen werden sehr bevorzugt derart gewählt, daß sie in einem Bereich von 200.000 bis 4.000.000 g/mol liegen; speziell für die weitere Verwendung als Schmelzhaftklebermit anisotropen Verhalten werden Haftklebemassen mit mittleren Molekulargewichten $M_W$ von 400.000 bis 1.400.000 g/mol hergestellt. Die Bestimmung des mittleren Molekulargewichtes erfolgt über Größenausschlußchromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wäßrigen Polymerisationsreaktionen können mit einem mit Wasser mischbaren oder hydrophilen Colösüngsmittel versetzt werden, um zu gewährleisten, daß das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung von Acrylatschmelzhaftklebern kann es auch von Vorteil sein, die Acrylathaftklebemassen in Substanz zu polymerisieren. Hier eignet sich insbesondere die Präpolymerisationstechnik einzusetzen. Die Polymerisation wird mit UV-Licht iniitiert, aber nur zu einem geringen Umsatz ca. 10 - 30 % geführt. Anschließend kann dieser Polymersirup z.B. in Folien eingeschweisst werden (im einfachsten Fall Eiswürfel) und dann in Wasser zu hohem Umsatz durchpolymerisiert werden. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind.

Ein anderes vorteilhaftes Herstellungsverfahren für die Poly(meth)acrylathaftklebemassen ist die anionische

Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im allgemeinen durch die Struktur $P_L(A)$-Me repräsentiert, wobei Me ein Metall der Gruppe I, wie z.B. Lithium, Natrium oder Kalium, und $P_L(A)$ ein wachsender Polymerblock aus den Monomeren A ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Polyacrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

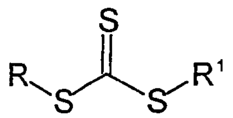

(I)

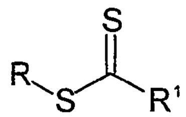

(II)

worin R und $R^1$ unabhängig voneinander gewählt oder gleich sind

- verzweigte und unverzweigte $C_1$- bis $C_{18}$-Alkylreste; $C_3$- bis $C_{18}$-Alkenylreste; $C_3$-bis $C_{18}$-Alkinylreste; $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanatogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff

darstellen.

Kontrollreagenzien des Typs (I) bestehen bevorzugt aus folgenden weiter eingeschränkten Verbindungen:

Halogenatome sind hierbei bevorzugt F, Cl, Br oder I, mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.

Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.

Beispiele für Alkinyl mit 3 bis 18 Kohlenstoffatomen sind Propinyl, 2-Butinyl, 3-Butinyl, n-2-Octinyl und n-2-Octadecinyl.

Beispiele für Hydroxy-substituierte Alkylreste sind Hydroxypropyl, Hydroxybutyl oder Hydroxyhexyl.

Beispiele für Halogen-substituierte Alkylreste sind Dichlorobutyl, Monobromobutyl oder Trichlorohexyl.

Ein geeigneter $C_2$-$C_{18}$-Hetero-Alkylrest mit mindestens einem O-Atom in der Kohlenstoffkette ist beispielsweise

$-CH_2-CH_2-O-CH_2-CH_3$.

Als $C_3$-$C_{12}$-Cycloalkylreste dienen beispielsweise Cyclopropyl, Cyclopentyl, Cyclohexyl oder Trimethylcyclohexyl.

Als $C_6$-$C_{18}$-Arylreste dienen beispielsweise Phenyl, Naphthyl, Benzyl, 4-tert.-Butylbenzyl- oder weitere substituierte Phenyl, wie z.B. Ethyl, Toluol, Xylol, Mesitylen, Isopropylbenzol, Dichlorobenzol oder Bromtoluol.

Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

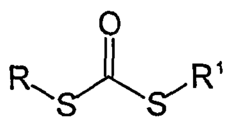

(III)

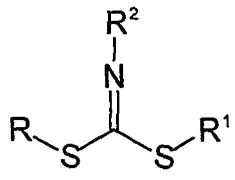

(IV)

wobei $R^2$ ebenfalls unabhängig von R und $R^1$ aus der oben aufgeführten Gruppe für diese Reste gewählt werden kann.

Beim konventionellen ‚RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

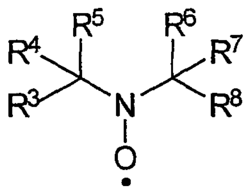

(Va)

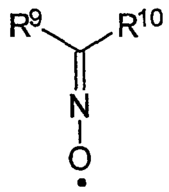

(Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder lod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PO(OR^{13})_2$,

wobei $R^{11}$, $R^{12}$ und $R^{13}$ für Reste aus der Gruppe ii) stehen.

Verbindungen der Struktur (Va) oder (Vb) können auch an Polymerketten jeglicher Art gebunden sein (vorrangig in dem Sinne, daß zumindest einer der oben genannten Reste eine derartige Polymerkette darstellt) und somit zum Aufbau von Polyacrylathaftklebemassen genutzt werden.

Mehr bevorzugt werden kontrollierte Regler für die Polymerisation von Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Haftklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

<u>Orientierung, Beschichtungsverfahren, Ausrüstung des Trägermaterials mit der Haftklebemasse</u>

Zur Herstellung von orientierten Haftklebemassen werden die oben beschriebenen Polymer bevorzugt als Hotmelt-Systeme (also aus der Schmelze) beschichtet. Für das Herstellungsverfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %. Der Hotmelt wird aus der Schmelze weiterverarbeitet.

In einer bevorzugten Ausführungsform wird die Orientierung innerhalb der Haftklebemasse durch das Beschichtungsverfahren erzeugt. Zur Beschichtung als Hotmelt und somit auch zur Orientierung können unterschiedliche Beschichtungsverfahren herangezogen werden. In einer Ausführung werden die Polyacrylathaftklebemassen über ein Walzenbeschichtungsverfahren beschichtet und die Orientierung über Recken erzeugt. Unterschiedliche Walzenbeschichtungsverfahren sind im "Handbook of Pressure Sensitive Adhesive Technology" von Donatas Satas (van Nostrand, New York 1989) beschrieben. In einer weiteren Ausführung wird die Orientierung durch Beschichtung über eine Schmelzdüse erreicht. Hier kann zwischen dem Kontakt und dem Kontaktlosen Verfahren unterschieden werden. Die Orientierung der Haftklebemasse kann hier zum einen durch das Düsendesign innerhalb der Beschichtungsdüse erzeugt werden oder wiederum durch einen Reckprozess nach dem Düsenaustritt. Die Orientierung ist frei einstellbar. Das Reckverhältnis

kann z.B. durch die Breite des Düsenspaltes gesteuert werden. Eine Reckung tritt immer dann auf, wenn die Schichtdicke des Haftklebefilms auf dem zu beschichtenden Trägermaterial geringer ist als die Breite des Düsenspaltes .

In einem weiteren bevorzugten Verfahren wird die Orientierung durch die Extrusionsbeschichtung erzielt. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals. Durch die Form der Extrusionsdüse kann ebenfalls eine Orientierung innerhalb des Schmelzhaftklebers erzeugt werden. Weiterhin kann hier - in Analogie zur Schmelzdüsenbeschichtung - ebenfalls eine Orientierung nach dem Düsenaustritt durch Reckung des Haftklebebandfilmes erzielt werden.

Zur Herstellung von orientierten Acrylathaftklebemassen wird besonders bevorzugt mit einer Bügeldüse auf einen Träger beschichtet, und zwar derart, daß durch eine Relativbewegung von Düse zu Träger eine Polymerschicht auf dem Träger entsteht.

Die Zeitdauer zwischen der Beschichtung und der Vernetzung ist in günstiger Weise gering. In einer bevorzugten Vorgehensweise wird nach weniger als 60 Minuten vernetzt, in einer mehr bevorzugten Vorgehensweise nach weniger 3 Minuten, in einer äußerst bevorzugen Vorgehensweise im in-line Verfahren nach weniger als 5 Sekunden.

Bei dem mit Haftklebemasse ausgerüsteten Trägermaterial kann es sich um ein ein- oder doppelseitiges Klebeband mit zumindest einem Permanentträger handelt.

In einer bevorzugten Vorgehensweise wird direkt auf ein Trägermaterial beschichtet. Die Haftklebemasse ist dabei bevorzugt ein- oder beidseitig auf ein Trägermaterial aufgetragen. Als Trägermaterial sind prinzipiell Folien wie z.B. BOPP oder MOPP, PET, PVC oder Papiere oder Vliese (Basis: Cellulose oder Polymere) geeignet. Weiterhin kommen auch Schäume (z.B. PUR, PE, PE/EVA, EPDM, PP, PE, Silikon, usw.) oder Trennpapiere (Glassine Papiere, Kraft Papiere, polyolefinisch beschichtete Papiere) oder Trennfolien (PET, PP oder PE oder Kombinationen aus diesen Materialien) als Beschichtungssubstrate in Frage.

Alternativ lassen sich auch trägerlose Haftklebebänder stanzen. Hierbei handelt es sich bei dem mit Haftklebemasse ausgerüsteten Trägermaterial um einen temporären Träger, auf den das zu stanzende Material, beispielsweise ein an sich trägerloses Klebeband, reversibel aufgelegt ist. Hierzu eignen sich besonders entsprechend beschichtete Trägermaterialien, also etwa die vorstehend geschilderten Trennpapiere oder -folien.

Derartige temporäre Träger lassen sich auch für trägerhaltige Materialien zusätzlich verwenden, insbesondere zu Stabilisierungszwecken während des Stanzvorgangs.

Das zu stanzende Material kann weiterhin, insbesondere zur Trennung der einzelnen Haftklebemassenbahnen, vorteilhaft mit Trennfolie oder Trennpapier belegt sein.

Die besten Orientierungs-Effekte werden durch das Ablegen auf einer kalten Oberfläche erzielt. Daher sollte das Trägermaterial durch eine Walze während der Beschichtung direkt gekühlt werden. Die Kühlung der Walze kann durch einen Flüssigkeitsfilm/Kontaktfilm von außen oder von innen oder durch ein kühlendes Gas erfolgen. Das kühlende Gas kann ebenfalls dazu eingesetzt werden, um die aus der Beschichtungsdüse austretende Haftklebemasse abzukühlen. In einer bevorzugten Vorgehensweise wird die Walze mit einem Kontaktmedium benetzt, welches sich dann zwischen der Walze und dem Trägermaterial befindet. Bevorzugte Ausführungsformen für die Umsetzung einer solchen Technik werden weiter unten beschrieben.

Für dieses Verfahren kann sowohl eine Schmelzdüse als auch eine Extrusionsdüse eingesetzt werden. In einer sehr bevorzugten Vorgehensweise wird die Walze auf Raumtemperatur, in einer äußerst bevorzugten Vorgehensweise auf Temperaturen unterhalb 10 °C abgekühlt. Die Walze sollte mit rotieren.

In einer weiteren Vorgehensweise dieses Herstellverfahrens wird die Walze zudem zur Vernetzung der orientierten Haftklebemasse genutzt.

Zur UV-Vernetzung wird mittels kurzwelliger ultravioletter Strahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators, dem einzustellenden Vernetzungsgrad und dem Maßes der Orientierung angepaßt.

Weiterhin ist es möglich, die Polyacrylathaftklebemasse mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Es können auch beide Vernetzungsverfahren angewendet werden oder andere Verfahren, die hochenergetische Bestrahlung ermöglichen.

In einem weiteren bevorzugten Herstellverfahren werden die orientierten Haftklebemassen auf eine mit einem

Kontaktmedium versehende Walze beschichtet. Durch das Kontaktmedium kann wiederum die Haftklebemasse sehr schnell abgekühlt werden. Vorteilhaft wird dann später auf das Trägermaterial kaschiert.
Weiterhin kann als Kontaktmedium auch ein Material verwendet werden, welches in der Lage ist, einen Kontakt zwischen der Haftklebemasse und der Walzenoberfläche herzustellen, insbesondere ein Material, welches die Hohlräume zwischen Trägermaterial und Walzenoberfläche (beispielsweise Unebenheiten in der Walzenoberfläche, Blasen) ausfüllt. Zur Umsetzung dieser Technik wird eine rotierende Kühlwalze mit einem Kontaktmedium beschichtet. Als Kontaktmedium wird in einer bevorzugten Vorgehensweise eine Flüssigkeit gewählt, wie z.B. Wasser.
Für Wasser als Kontaktmedium bieten sich als Zusätze beispielsweise Alkylalkohole wie Ethanol, Propanol, Butanol, Hexanol an, ohne sich durch diese Beispiele in der Auswahl der Alkohole einschränken zu wollen. Weiterhin sehr vorteilhaft sind insbesondere längerkettige Alkohole, Polyglykole, Ketone, Amine, Carboxylate, Sulfonate und dergleichen. Viele dieser Verbindungen senken die Oberflächenspannung oder erhöhen die Leitfähigkeit.

Eine Absenkung der Oberflächenspannung kann auch durch den Zusatz geringer Mengen an nichtionischen und/oder anionischen und/oder kationischen Tensiden zu dem Kontaktmedium erreicht werden. Im einfachsten Fall lassen sich hierzu kommerzielle Spülmittel oder Seifenlösungen verwenden, bevorzugt in einer Konzentration von einigen g/l in Wasser als Kontaktmedium. Besonders geeignet sind spezielle Tenside, welche auch bei geringer Konzentration eingesetzt werden können. Hierfür seien beispielsweise Sulfoniumtenside (z.B. β-Di(hydroxyalkyl)sulfoniumsalz), weiterhin beispielsweise ethoxylierte Nonylphenylsulfonsäureammoniumsalze oder Blockcopolymere, insbesondere Diblöcke. Hier sei insbesondere verwiesen auf den Stand der Technik unter "surfactants" in Ullmann's Encyclopedia of Industrial Chemistry, Sixth Edition, 2000 Electronic Release, Wiley-VCH, Weinheim 2000.

Als Kontaktmedien können die vorgenannten Flüssigkeiten auch ohne den Zusatz von Wasser jeweils für sich oder in Kombination miteinander eingesetzt werden.
Zur Verbesserung der Eigenschaften des Kontaktmediums (beispielsweise zur Erhöhung der Scherresistenz, Verringerung der Übertragung von Tensiden oder dergleichen auf die Lineroberfläche und damit verbesserte Reinigungsmöglichkeiten des Endproduktes) können dem Kontaktmedium und/oder den eingesetzten Zusatzstoffen weiterhin vorteilhaft Salze, Gele und ähnliche viskositätssteigernde Additive zugesetzt werden.
Des weiteren kann die Walze makroskopisch glatt oder eine gering strukturierte Oberfläche aufweisen. Es hat sich bewährt, wenn sie eine Oberflächenstruktur besitzt, insbesondere eine Aufrauhung der Oberfläche. Die Benetzung durch das Kontaktmedium kann dadurch verbessert werden.
Besonders gut läuft das Beschichtungsverfahren ab, wenn die Walze temperierbar ist, bevorzugt in einem Bereich von -30 C bis 200°C, ganz besonders bevorzugt von 5 °C bis 25 °C.
Das Kontaktmedium wird bevorzugt auf die Walze aufgetragen werden. Dabei kann eine zweite Walze, welche das Kontaktmedium aufnimmt, zum kontinuierlichen Benetzen der Beschichtungswalze verwendet werden. Es ist aber auch möglich, daß es berührungslos aufgebracht wird, zum Beispiel durch Aufsprühen.

Für die Variante des Herstellverfahrens, bei der die Walze gleichzeitig zur Verwendung z.B. mit Elektronenstrahlen eingesetzt wird, wird gewöhnlich eine geerdete Metallwalze, die die auftreffenden Elektronen und die dabei entstehende Röntgenstrahlung absorbiert eingesetzt.

Zur Verhinderung der Korrosion ist die Walze gewöhnlich mit einer Schutzschicht überzogen. Diese wird bevorzugt so ausgewählt, daß sie von dem Kontaktmedium gut benetzt wird. Im allgemeinen ist die Oberfläche leitfähig. Es kann aber auch günstiger sein, sie mit einer oder mehreren Schichten aus isolierendem oder halbleitendem Material zu beschichten.

Für den Fall einer Flüssigkeit als Kontaktmedium kann man in hervorragender Weise vorgehen, wenn eine zweite Walze, vorteilhaft mit einer benetzbaren oder saugfähigen Oberfläche, durch ein Bad mit dem Kontaktmedium läuft, dabei mit dem Kontaktmedium benetzt oder getränkt wird und durch Berührung mit der Walze einen Film dieses Kontaktmediums aufträgt bzw. aufstreicht.

In einer bevorzugten Vorgehensweise wird die Haftklebemasse direkt auf der mit dem Kontaktmedium versehenden Walze beschichtet und vernetzt. Hierfür können wiederum die beschriebenen Methoden und Anlagen zur UV-Vemetzung und ES-Vernetzung eingesetzt werden. Nach der Vernetzung wird dann die orientierte Haftklebemasse auf ein Trägermaterial übertragen. Es können die bereits zitierten Trägermaterialien eingesetzt werden.

Die Ausprägung der Orientierung innerhalb der Acrylathaftklebemassen ist vom Beschichtungsverfahren abhängig. Die Orientierung kann z.B. durch die Düsen- und Beschichtungstemperatur sowie durch das Molekulargewicht der Polyacrylathaftklebemasse gesteuert werden.
Der Grad der Orientierung ist durch die Düsenspaltbreite frei einstellbar. Je dicker der Haftklebemassenfilm ist, der aus der Beschichtungsdüse herausgedrückt wird, desto stärker kann die Klebemasse auf einen dünneren Haftklebemassenfilm auf dem Trägermaterial gereckt werden. Dieser Reckungsvorgang kann neben der frei einstellbaren Düsenbreite auch durch die Bahngeschwindigkeit des abnehmenden Trägermaterials frei eingestellt werden.

Die Messung der Orientierung der Klebemasse kann mit einem Polarimeter, mit Infrarot-Dichroismus oder mit Röntgenstreuung erfolgen. Es ist bekannt, daß die Orientierung in Acrylathaftklebemassen im unvernetzten Zustand in vielen Fällen lediglich einige Tage erhalten bleibt. Das System relaxiert in der Ruhe- oder Lagerungszeit und verliert

seine Vorzugsrichtung. Durch die Vernetzung nach der Beschichtung kann dieser Effekt bedeutend verstärkt werden. Die Relaxierung der orientierten Polymerketten konvergiert gegen Null, und die orientierten Haftklebemassen können ohne Verlust ihrer Vorzugsrichtung über einen sehr großen Zeitraum gelagert werden.

Neben der Messung der Orientierung durch die Bestimmung des $\Delta n$ Wertes (Test C) eignet sich ebenfalls die Messung des Rückschrumpfes im freien Film (s. Test B) zur Ermittlung der Orientierung und der anisotropen Eigenschaften der Haftklebemasse.

Neben den beschriebenen Verfahren kann die Orientierung auch nach der Beschichtung erzeugt werden. Hier wird dann bevorzugt ein dehnbares Trägermaterial eingesetzt, wobei dann die Haftklebemasse bei Ausdehnung mit gereckt wird. Für diesen Fall lassen sich auch konventionell aus Lösung oder Wasser beschichtete Acrylathaftklebemassen einsetzen. In einer bevorzugten Vorgehensweise wird dann diese gereckte Haftklebemasse wiederum mit actinischer Strahlung vernetzt.

<u>Stanzverfahren</u>

In dem erfinderischen Verfahren erfolgt der Stanzprozeß diskontinuierlich. Für derartige Stanzprozesse lassen sich in hervorragender Weise beispielsweise Flachbettstanzen einsetzen. Der Stanzprozeß kann ein Durchstanz- oder ein Anstanzprozeß sein. Entsprechend lassen sich folgende Varianten vorteilhaft durchführen:

- Der Stanzprozeß durchtrennt die Haftklebemasse auf dem Trägermaterial vollständig,
- der Stanzprozeß durchtrennt die Haftklebemasse auf dem Trägermaterial nicht vollständig,
- der Stanzprozeß durchtrennt das mit Haftklebemasse ausgerüstete Trägermaterial vollständig,
- der Stanzprozeß durchtrennt das mit Haftklebemasse ausgerüstete Trägermaterial nicht oder nur teilweise.

Vorteilhaft kann das mit der Haftklebemasse ausgerüstete Trägermaterial derart in den Stanzprozeß eingebracht werden, daß die Arbeitsrichtung (machine direction MD) der Vorzugsrichtung VR der Haftklebemasse entspricht oder, in alternativer Vorgehensweise hierzu, senkrecht dazu liegt. Sehr vorteilhaft werden die durch den Stanzprozeß geführte Haftklebemasse und die Stanzmesser derart zueinander ausgerichtet, daß die Stanzschnitte bevorzugt senkrecht zur Vorzugsrichtung der Haftklebemasse verlaufen.

Die Beschichtung der Haftklebemasse auf das Trägermaterial und der folgende Stanzprozeß können dabei in einem inline-Prozeß, also in einer kombinierten Anlage und/oder fortlaufender Abfolge durchgeführt werden.

Alternativ kann es sehr vorteilhaft sein, den Beschichtungsprozeß und den Stanzprozeß zeitlich und/oder räumlich voneinander zu trennen.

Die Stanzvorgänge können dabei vorteilhaft in Vorgänge eingebaut sein, so daß das erfinderische Verfahren vorteilhaft mehrere oder alle der folgenden Schritte beinhaltet. Beschrieben ist beispielhaft die Verarbeitung eines doppelseitigen Haftklebebandes.

<u>Variante A, diskontinuierlicher Vorgang:</u>

1. **Abwicklung** des doppelseitigen Versuchsklebebandes und des silikonisierten Hilfstrennmaterials.
2. **Zukaschierung** eines silikonisierten Hilfstrennmaterials vor der Flachbettstanze von oben auf die offene klebende Seite des Versuchsklebebandes
3. **Flachbettstanzvorgang:** Durchtrennung des silikonisierten Hilfstrennmaterials und des Klebeverbundes. Die Stanzmesser dringen im Idealfall nur minimal in die silikonisierte Oberfläche des Originaltrennmaterials des doppelseitigen Versuchsklebebandes ein.
4. **Abgitterung**: Abziehen des Gitternetzes. Auf dem Originaltrennmaterial bleiben die Stanzlinge zurück.
5. **Aufrollung** der Fertigprodukte (= mit Hilfstrennmaterial abgedeckte Stanzlinge auf Originaltrennmaterial als Träger) und Aufrollung des abgezogenen Gitternetzes.

<u>Variante B, diskontinuierlicher Vorgang:</u>

1. **Abwicklung** des doppelseitigen Versuchsklebebandes und des silikonisierten Hilfstrennmaterials.
2. **Zukaschierung** des Versuchsklebebandes mit der klebenden Seite nach unten auf ein silikonisierten Hilfstrennmaterials vor der Flachbettstanze.
3. **Flachbettstanzvorgang:** Durchtrennung des doppelseitigen Versuchsklebebandes und des Klebeverbundes.

Die Stanzmesser dringen im Idealfall nur minimal in die silikonisierte Oberfläche des Hilfstrennmaterials ein.
4. **Abgitterung**: Abziehen des Gitternetzes. Auf dem silikonisierten Hilfstrennmaterials bleiben die Stanzlinge zurück.
5. **Aufrollung** des Fertigprodukte (= mit Originaltrennmaterial abgedeckte Stanzlinge auf Hilfstrennmaterial als Träger) mit den Stanzlingen und Aufrollung des abgezogenen Gitternetzes.

Beispiele für die Geschwindigkeit, mit der das mit der Haftklebemasse ausgerüstete Trägermaterial durch die Anlage läuft, sind 0,1 m/min bis 100 m/min. In der Praxis heute gängige Geschwindigkeiten für Stanzprozesse sind 10 bis 30 m/min.

Fig. 2 und Fig. 3 zeigen beispielhaft zwei Querschnitte für derartige Stanzanlagen, Fig. 2 mit integrierter Laminierstation. Dabei bedeuten:

9 Flachbettstanzeinheit
10 Abzug des Gitternetzes
11 Abrollung des silikonisierten Trennmaterials
12 Abrollung des zu stanzenden Materials, insbesondere des Klebebandes
13 Aufrollung des Gitternetzes
14 Aufrollung des Fertigproduktes
15 Zugstation
16 Laminierstation

Verwendung

Stanzprodukte, welche nach dem erfinderischen Verfahren in einer seiner Ausführungsformen erhalten werden können oder erhalten wurden, können als ein- oder doppelseitig klebende Produkte, zum Verkleben im Haushalt und in der Industrie, besonders im Automobilbau, in der Elektro- und Elektronikindustrie, für alle Montagezwecke wie z.B. von Schildern, Enblemen und Folientastaturen, im medizinischen Bereich (Pflaster, Wundabdeckungen) und dergleichen verwendet werden, um nur einige Anwendungsbeispiele zu nennen. Die Stanzlinge sind generell überall dort einsetzbar, wo heute gestanzte einseitig klebende Klebeetiketten und doppelseitig klebende Klebefolien zur Verwendung kommen.

Experimente

Die Erfindung wird im folgenden durch Experimente beschrieben, ohne sich durch die Wahl der untersuchten Proben unnötig beschränken zu wollen..

Folgende Testmethoden wurden angewendet.

Gelpermeationschromatographie GPC (Test A)

Die Bestimmung des mittleren Molekulargewichtes $M_W$ und der Polydisperisität PD erfolgte über die Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

Messung des Rückschrumpfes (Test B)

Parallel zur Beschichtungsrichtung des Hotmeits wurden Streifen von mindestens 30 mm Breite und 20 cm Länge geschnitten. Bei Masseaufträgen bei 100 g/m$^2$ wurden je 4 Streifen übereinander laminiert, bei 50 g/m$^2$ 8 Streifen übereinander laminiert, um vergleichbare Schichtdicken zu erhalten. Der derart erhaltene Körper wurde dann auf exakt 20 mm Breite geschnitten und an den jeweiligen Enden in einem Abstand von 15 cm mit Papierstreifen überklebt. Der auf diese Weise präparierte Prüfkörper wurde dann bei RT vertikal aufgehängt und die Änderung der Länge über die Zeit verfolgt, bis keine weitere Schrumpfung der Probe mehr festgestellt werden konnte. Die um den Endwert reduzierte Ausgangslänge wurde dann bezogen auf die Ausganglänge als Rückschrumpf in Prozent angegeben.
Für die Messung der Orientierung nach längerer Zeit wurden die beschichteten und orientierten Haftklebemassen über einen längeren Zeitraum als Lappenmuster gelagert und anschließend analysiert.

Messung der Doppelbrechung (Test C)

Version 1

Ein Spektralphotometer Modell Uvikon 910 wurde im Probenstrahl mit zwei gekreuzten Polarisationsfiltern versehen. Orientierte Acrylate wurden zwischen zwei Objekträgern fixiert. Die Schichtdicke der orientierten Probe wurde aus Vorversuchen mittels Dickentaster ermittelt. Die derart vorbereitete Probe wurde im Meßstrahl des Spetralphotometers derart plaziert, daß ihre Orientierungsrichtung um jeweils 45° von den optischen Achsen der beiden Polarisationsfilter abwich. Mittels einer zeitaufgelösten Messung wurde dann die Transmission über die Zeit verfolgt.
Aus den Transmissionsdaten wurde dann die Doppelbrechung gemäß folgender Beziehung ermittelt:

$$T = \sin^2 (\pi \times R)$$

Die Retardation R setzt sich wie folgt zusammen:

$$R = \frac{d}{\lambda} \Delta n$$

Die Transmission ergibt sich weiterhin aus

$$T = \frac{I_t}{I_0}$$

Daraus folgt letztendlich für die Doppelbrechung

$$\Delta n = \frac{\lambda}{\pi d} \arcsin \sqrt{T} .$$

In den Formeln bedeuten:

d = Probendicke
$\lambda$ = Wellenlänge
$I_t$ = Intensität des austretenden (durchgelassenen) Lichtstrahls
$I_0$ = Intensität des einfallenden Lichtstrahls

Version 2

Die Messung der Doppelbrechung erfolgte mit einem Versuchsaufbau, wie er analog in der Encyclopedia of Polymer Science, John Wiley & Sons, Vol. 10, S. 505, 1987 als Circular-Polariskop beschrieben ist. Das ausgesendete Licht eines diodengepumpten Festkörperlasers mit der Wellenlänge $\lambda$ = 532 nm wird zunächst durch ein Polarisationsfilter linear polarisiert und dann unter Verwendung einer $\lambda$/4-Platte mit $\lambda$ = 532 nm zirkular polarisiert. Dieser derart polarisierte Laserstrahl wird sodann durch die orientierte Acrylatmasse geführt. Da Acrylatmassen hochtransparent sind, kann der Laserstrahl die Masse praktisch ungehindert passieren. Sind die Polymermoleküle der Acrylatmasse orientiert, so hat dies eine Änderung der Polarisierbarkeit der Acrylatmasse je nach Beobachtungswinkel zur Folge (Doppelbrechung). Der elektrische Feldvektor des zirkular polarisierten Laserstrahles erfährt durch diesen Effekt eine Drehung um die Fortschreitungsachse des Laserstrahles. Nach Verlassen der Probe wird der derart manipulierte Laserstrahl durch eine zweite $\lambda$/4-Platte mit $\lambda$ = 532 nm geführt, deren optische Achse um 90° von der optischen Achse der ersten $\lambda$/4-Platte abweicht. Nach diesem Filter schließt sich ein zweiter Polarisationsfilter an, der ebenfalls um 90° vom ersten Polaroidfilter abweicht. Schließlich wird die Intensität des Laserstrahles mit einem Photosensor vermessen.

Herstellung der Proben

Polymer 1

Ein für radikalische Polymerisationen konventioneller 200 L-Reaktor wurde mit 2400 g Acrylsäure, 64 kg 2-Ethylhexylacrylat, 6,4 kg N-Isopropylacrylamid und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt. Die Bestimmung des Molekulargewichtes nach Test A ergab ein $M_w$ = 814.000 g/mol bei einer Polydisperistät $M_w/M_n$ = 5,2.

Polymer 2

Ein für radikalische Polymerisationen konventioneller 200 L-Reaktor wurde mit 1200 g Acrylsäure, 74 kg 2-Ethylhexylacrylat, 4,8 kg N-Isopropylacrylamid und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt.
Die Bestimmung des Molekulargewichtes nach Test A ergab ein $M_W$ = 801.000 g/mol bei einer Polydisperistät $M_W/M_n$ = 5,7.

i) Musterherstellung zur Bestimmung des Rückschrumpfes

Die Haftklebemassen in Lösung wurden an einem Bersdorff Aufkonzentrationsextruder mit einem Durchsatz von ca. 40 kg/h bei einer Temperatur von ca. 115 °C aufkonzentriert. Der Restlösemittelanteil belief sich nach der Aufkonzentration auf kleiner 0,5 Gew.-%. Dann wurde durch eine Bügel-Extrusionsdüse mit einem Düsenspalt von 300 μm und einer Beschichtungsbreite von 33 cm bei einer bestimmten Beschichtungstemperatur (Massetemperatur) mit einer Bahngeschwindigkeit von 10 m/min auf eine mit 1,5 g/m$^2$ Silikonbeschichtete (Polydimethylsiloxan) 12 μm PET-Folie beschichtet. Bei einem Masseauftrag von 100 g/m$^2$ (ca. 100 μm dicke Haftklebeschicht) wurde ein Reckverhältnis von 3:1, bei einem masseauftrag von 50 g/m$^2$ (ca. 50 μm dicke Haftklebemasseschicht) wurde ein Reckverhältnis von 6:1 eingestellt.
Die silikonisierte PET-Folie wurde über eine auf 5 °C abgekühlte und mitrotierende Stahlwalze geführt. Beim Auflagepunkt des Haftklebefilms auf die PET-Folie wurde somit der Haftklebemassenfilm sofort heruntergekühlt. Der Masseauftrag betrug 50 oder 100 g/m$^2$. Im In-line Verfahren wurde dann nach einer Bahnstrecke von ca. 5 m das Haftklebeband entweder mit UV-Strahlen oder Elektronenstrahlen vernetzt.
Für die Elektronenbestrahlung erfolgte die Vernetzung mit einem Gerät der Fa. Electron Crosslinking AB, Halmstad, Schweden. Das beschichtete Haftklebeband wurde dabei über eine standardmäßig vorhandene Kühlwalze unter dem Lenard-Fenster des Beschleunigers hindurch geführt. Dabei wurde in der Bestrahlungszone der Luftsauerstoff durch Spülen mit reinem Stickstoff verdrängt. Die Bahngeschwindigkeit betrug jeweils 10 m/min. Es wurde mit einer Beschleunigungsspannung von 200 kV durchstrahlt.
Für die UV-Bestrahlung wurde ein Quecksilber-Mitteldruckstrahler der Fa. Eltosch mit einer Intensität von 160 W/cm$^2$ eingesetzt. Die UV-Dosis betrug ca. 1,6 J/cm$^2$. Es wurde unter Luftatmosphäre bestrahlt.
Zur Bestimmung des Rückschrumpfes und daher des Maßes der Orientierung wurde der Test B durchgeführt.

ii) Herstellung der orientierten Haftklebebänder für den Stanzprozess

Es wurde analog zu i) vorgegangen. Als Trägermaterial wurde aber eine frisch mit Corona vorbehandelte 12 μm dicke PET-Folie eingesetzt. Alle Prozessparameter (Bahngeschwindigkeit, Beschichtungstemperatur, Reckverhältnis, Polyacrylathaftklebemasse, Vernetzungsdosis) wurden konstant gehalten. Zur Herstellung der Stanzprodukte wurde die Haftklebemasse zunächst auf die Corona behandelte PET-Folie beschichtet,vemetzt und dann die Haftklebeseite mit einem Trennpapier (120 μm polyolefinisch (PE) beschichtetes Papier, beidseitig silikonisiert, 1,4 g/m$^2$ Polydimethylsiloxan, Fa. Loparex oder 100 μm Glassin-Trennpapier, einseitig silikonisiert, vergleiche Tabelle 2) abgedeckt. Im zweiten

Schritt wurde auf die andere PET Folienseite die aus i) bereits vernetzte Haftklebemasse zukaschiert, wobei über eine Walze die Haftklebemasse angedrückt wurde und anschließend die silikonisierte PET-Folie delaminiert wurde. Das doppelseitige Haftklebeband wird zum Schluss aufgerollt.
Der zweite Arbeitsschritt entfiel bei der Herstellung der nur einseitig klebenden Muster.
Fig. 4 zeigt eine Skizze des Aufbaus der entsprechenden Muster. Dabei bedeuten:

1 anisotrope Haftklebemasse
2 PET-Folienträger, hier 12 μm
3 anisotrope Haftklebemasse
4 Trennmaterial

iii) Herstellung der nicht orientierten Haftklebebänder für den Stanzprozess

Die Haftklebemassen in Lösung wurden auf ein silikonisiertes Trennpapier (120 μm polyolefinisch (PE) beschichtetes Papier, beidseitig silikonisiert, 1,4 g/m$^2$ Polydimethylsiloxan, Fa. Loparex oder 100 μm Glassin-Trennpapier, einseitig silikonisiert, vergleiche Tabelle 2) beschichtet (Auftragsverfahren: Streichbalken). In einem Trockenkanal wurde das Lösemittel über mehrere Temperaturzonen entfernt, wobei in der ersten Zone mit 50 °C, dann mit 80 °C, und in den letzten drei Heizzonen mit 100 °C erhitzt wurde. Die Bahngeschwindigkeit betrug 10 m/min. Nach der thermischen Entfernung der Lösungsmittel wurde die 12 μm dicke PET Folie zukaschiert. In einem zweiten Schritt wurde auf die PET Folie dieses Verbundes wiederum gelöste Haftklebemasse beschichtet. Das Lösungsmittel wurde thermisch entfernt. Das doppelseitige Haftklebeband wird zum Schluss aufgerollt.
Der zweite Arbeitsschritt entfiel bei der Herstellung der nur einseitig klebenden Muster.

Haftklebeband A

Polymer 1 wird nach i) aufkonzentriert und nach ii) wird 2 x 100 g/m$^2$ auf eine 12 μm dicke PET-Folie beschichtet. Die Beschichtungstemperatur betrug 150°C. Es wurde mit 30 kGy ES-Dosis vernetzt.

Haftklebeband B

Polymer 1 wird nach i) aufkonzentriert und nach ii) wird 2 x 50 g/m$^2$ auf eine 12 μm dicke PET-Folie beschichtet. Die Beschichtungstemperatur betrug 150°C. Es wurde mit 30 kGy ES-Dosis vernetzt.

Haftklebeband C

Polymer 1 wird nach i) aufkonzentriert und nach ii) wird 100 g/m$^2$ auf eine 12 μm dicke PET-Folie beschichtet. Die Beschichtungstemperatur betrug 150°C. Es wurde mit 30 kGy ES-Dosis vernetzt.

Haftklebeband D

Polymer 1 in Lösung wird mit 0,5 Gew.-% Isopropylthioxanthon (Speedcure ITX, der Fa. Rahn) bezogen auf das Polymer abgemischt. Anschließend wird nach i) aufkonzentriert und nach ii) mit 2 x 100 g/m$^2$ auf eine 12 μm dicke PET-Folie beschichtet. Die Beschichtungstemperatur betrug 150°C. Es wurde mit einer UV-Bestrahlungsdosi von 2,5 J/cm$^2$ vernetzt.

Haftklebeband E

Polymer 1 in Lösung mit 0,5 Gew.-% Isopropylthioxanthon (Speedcure ITX, der Fa. Rahn) bezogen auf das Polymer abgemischt. Anschließend wird nach i) aufkonzentriert und nach ii) mit 2 x 50 g/m$^2$ auf eine 12 μm dicke PET-Folie beschichtet. Die Beschichtungstemperatur betrug 150°C. Es wurde mit einer UV-Bestrahlungsdosis von 2,0 J/cm$^2$ vernetzt.

Haftklebeband F

Polymer 1 wird in Lösung mit 2 Gew.-% Genomer 4212® (Polyurethandiacrylat der Fa. Rahn) und mit 30 Gew.-% DT 110 (Terpen-Phenolharz der Fa. DRT) abgemischt. Anschließend wird nach i) aufkonzentriert und nach ii) wird 2 x 100 g/m$^2$ auf eine 12 μm dicke PET-Folie beschichtet. Die Beschichtungstemperatur betrug 150°C. Es wurde mit 70 kGy ES-Dosis vernetzt.

Haftklebeband G

Polymer 1 wird in Lösung mit 2 Gew.-% Genomer 4212® (Polyurethandiacrylat der Fa. Rahn) und mit 30 Gew.-% DT 110 (Terpen-Phenolharz der Fa. DRT) abgemischt. Anschließend wird nach i) aufkonzentriert und nach ii) wird 2 x 50 g/$m^2$ auf eine 12 μm dicke PET-Folie beschichtet. Die Beschichtungstemperatur betrug 150°C. Es wurde mit 70 kGy ES-Dosis vernetzt.

Haftklebeband H

Polymer 1 wird in Lösung mit 2 Gew.-% Genomer 4212® (Polyurethandiacrylat der Fa. Rahn) und mit 30 Gew.-% DT 110 (Terpen-Phenolharz der Fa. DRT) abgemischt. Anschließend wird nach i) aufkonzentriert und nach ii) wird 100 g/$m^2$ auf eine 12 μm dicke PET-Folie beschichtet. Die Beschichtungstemperatur betrug 150°C. Es wurde mit 70 kGy ES-Dosis vernetzt.

Haftklebeband I

Polymer 1 wird in Lösung mit 0,5 Gew.-% Isopropylthioxanthon (Speedcure ITX, der Fa. Rahn), 2,5 Gew.-% Genomer 4212® (Polyurethandiacrylat der Fa. Rahn) und mit 30 Gew.-% DT 110 (Terpen-Phenolharz der Fa. DRT) abgemischt. Anschließend wird nach i) aufkonzentriert und nach ii) mit 2 x 50 g/$m^2$ auf eine 12 μm dicke PET-Folie beschichtet. Die Beschichtungstemperatur betrug 150°C. Es wurde mit einer UV-Bestrahlungsdosis von 3,0 J/$cm^2$ vernetzt.

Haftklebeband J

Polymer 2 wird in Lösung mit 2 Gew.-% Genomer 4212® (Polyurethandiacrylat der Fa Rahn), mit 30 Gew.-% Novares TK 90® (C5-C9 Kohlenwasserstoffharz der Fa. VFT Rüttgers) und 8 Gew.-% Reofos 65® (Oligophosphat der Fa. Great Lakes Chemical) abgemischt. Anschließend wird nach i) aufkonzentriert und nach ii) mit 2 x 100 g/$m^2$ auf eine 12 μm dicke PET-Folie beschichtet. Die Beschichtungstemperatur betrug 120°C. Es wurde mit 60 kGy ES- Dosis vernetzt.

Haftklebeband K

Polymer 2 wird in Lösung mit 2 Gew.-% Genomer 4212® (Polyurethandiacrylat der Fa. Rahn), mit 30 Gew.-% Novares TK 90® (C5-C9 Kohlenwasserstoffharz der Fa. VFT Rüttgers) und 8 Gew.-% Reofos 65® (Oligophosphat der Fa. Great Lake Chemicals) abgemischt. Anschließend wird nach i) aufkonzentriert und nach ii) mit 2 x 50 g/$m^2$ auf eine 12 μm dicke PET-Folie beschichtet. Die Beschichtungstemperatur betrug 120°C. Es wurde mit 60 kGy ES- Dosis vernetzt.

Haftklebeband L

Polymer 2 wird in Lösung mit 2 Gew.-% Genomer 4212® (Polyurethandiacrylat der Fa. Rahn), mit 30 Gew.-% Novares TK 90® (C5-C9 Kohlenwasserstoffharz der Fa. VFT Rüttgers) und 8 Gew.-% Reofos 65® (Oligophosphat der Fa. Great Lake Chemicals) abgemischt. Anschließend wird nach i) aufkonzentriert und nach ii) mit 100 g/$m^2$ auf eine 12 μm dicke PET-Folie beschichtet. Die Beschichtungstemperatur betrug 120°C. Es wurde mit 60 kGy ES- Dosis vernetzt:

Haftklebeband M

Polymer 1 wird aus Lösung nach iii) mit 2 x 100 g/$m^2$ auf eine 12 μm dicke PET-Folie beschichtet. Die Trocknungstemperatur betrug maximal 100°C. Es wurde mit 30 kGy ES-Dosis vernetzt.

Haftklebeband N

Polymer 1 wird aus Lösung nach iii) mit 2 x 50 g/$m^2$ auf eine 12 μm dicke PET-Folie beschichtet. Die Trocknungstemperatur betrug maximal 100°C. Es wurde mit 30 kGy ES-Dosis vernetzt.

Haftklebeband O

Polymer 1 wird aus Lösung nach iii) mit 100 g/$m^2$ auf eine 12 μm dicke PET-Folie beschichtet. Die Trocknungstemperatur betrug maximal 100°C. Es wurde mit 30 kGy ES-Dosis vernetzt.

Haftklebeband P

Polymer 1 wird in Lösung mit 2 Gew.-% Genomer 4212® (Polyurethandiacrylat der Fa. Rahn) und mit 30 Gew.-% DT 110 (Terpen-Phenolharz der Fa. DRT) abgemischt. Anschließend wird aus Lösung nach iii) mit 2 x 100 g/$m^2$ auf eine 12 μm dicke PET-Folie beschichtet. Die Trocknungstemperatur betrug maximal 100°C Es wurde mit 70 kGy ES-Dosis vernetzt.

Haftklebeband R

Polymer 1 wird in Lösung mit 2 Gew.-% Genomer 4212® (Polyurethandiacrylat der Fa. Rahn) und mit 30 Gew.-% DT 110 (Terpen-Phenolharz der Fa. DRT) abgemischt. Anschließend wird aus Lösung nach iii) mit 2 x 50 g/$m^2$ auf eine 12 μm dicke PET-Folie beschichtet. Die Trocknungstemperatur betrug maximal 100°C Es wurde mit 70 kGy ES-Dosis vernetzt.

Haftklebeband S

Polymer 1 wird in Lösung mit 2 Gew.-% Genomer 4212® (Polyurethandiacrylat der Fa. Rahn) und mit 30 Gew.-% DT 110 (Terpen-Phenolharz der Fa. DRT) abgemischt. Anschließend wird aus Lösung nach iii) mit 100 g/$m^2$ auf eine 12 μm dicke PET-Folie beschichtet. Die Trocknungstemperatur betrug maximal 100°C. Es wurde mit 70 kGy ES-Dosis vernetzt.

Haftklebeband T

Polymer 2 wird in Lösung mit 2 Gew.-% Genomer 4212® (Polyurethandiacrylat der Fa. Rahn), mit 30 Gew.-% Novares TK 90® (C5-C9 Kohlenwasserstoffharz der Fa. VFT Rüttgers) und 8 Gew.-% Reofos 65® (Oligophosphat der Fa. Great Lake Chemicals) abgemischt. Anschließend wird aus Lösung nach iii) mit 2 x 100 g/$m^2$ auf eine 12 μm dicke PET-Folie beschichtet. Die Trocknungstemperatur betrug maximal 100°C. Es wurde mit 60 kGy ES-Dosis vernetzt.

Haftklebeband U

Polymer 2 wird in Lösung mit 2 Gew.-% Genomer 4212® (Polyurethandiacrylat der Fa. Rahn), mit 30 Gew.-% Novares TK 90® (C5-C9 Kohlenwasserstoffharz der Fa. VFT Rüttgers) und 8 Gew.-% Reofos 65® (Oligophosphat der Fa. Great Lake Chemicals) abgemischt. Anschließend wird aus Lösung nach iii) mit 2 x 50 g/$m^2$ auf eine 12 μm dicke PET-Folie beschichtet. Die Trocknungstemperatur betrug maximal 100°C. Es wurde mit 60 kGy ES-Dosis vernetzt.

Haftklebeband V

Polymer 2 wird in Lösung mit 2 Gew.-% Genomer 4212® (Polyurethandiacrylat der Fa. Rahn), mit 30 Gew.-% Novares TK 90® (C5-C9 Kohlenwasserstoffharz der Fa. VFT Rüttgers) und 8 Gew.-% Reofos 65® (Oligophosphat der Fa. Great Lake Chemicals) abgemischt. Anschließend wird aus Lösung nach iii) mit 100 g/$m^2$ auf eine 12 μm dicke PET-Folie beschichtet. Die Trocknungstemperatur betrug maximal 100°C. Es wurde mit 60 kGy ES-Dosis vernetzt.

Als Referenzbeispiel zur Untersuchung des Stanzprozesses wurde ebenfalls ein Klebeband „SCOTCH® 9690 Laminating Adhesive" (3M, Neuss, Deutschland) eingesetzt.

Resultate

In einem ersten Schritt wurden 2 Polymere mit einem mittleren Molekulargewicht $M_w$ von ca. 800.000 g/mol hergestellt. Mit diesen Haftklebemassen wurden die Haftklebebänder A bis V hergestellt. Es wurden einseitige und doppelseitige Haftklebebänder untersucht,
wobei als Trägermaterial eine 12 μm dicke PET-Folie eingesetzt wurde. Um den Effekt der Stanzbarkeit in unterschiedlichen Prozessen zu beurteilen wurden eine Vielzahl unterschiedlicher Haftklebemassen hergestellt.
Die Haftklebebänder A,B,C,D,E und M,N,O enthalten als Haftklebemasse ein reines Polyacrylat ohne Zusatz. A und B differenzieren sich nur über den Masseauftrag. Die Haftklebebänder D und E sind mit A und B identisch und unterscheiden sich nur durch den UV-Photoinitiatorzusatz sowie dem UV-Vernetzungsmechnismus.
Die Haftklebebänder F,G,H,I und P,R,S enthalten ein Polyacrylat/Harzgemisch. Zudem ist noch ein difunktionelles Acrylat als Vernetzer beigemischt. Die Haftklebebänder sind durch den Harzzusatz bedeutend klebstärker. Die Haftklebebänder F und G unterscheiden sich wiederum durch den Masseauftrag, I wiederum durch den UV-Vernetzungsmechanismus.

Die Haftklebebänder J,K,L und T,U,V sind sehr tackige und klebstarke Haftklebebänder. Konventionelle Haftklebebänder, wie T,U,V, mit solchen weichen und tackigen Haftklebemassen lassen sich im allgemeinen schlecht oder gar nicht stanzen. Daher wurden die Haftklebebänder J,K,L ebenfalls mit einer sehr weichen, tackigen und orientierten Haftklebemasse ausgestattet, wobei das Polymer auf Polyacrylat 2 basiert.

In einer ersten Untersuchung wurde der Grad der Orientierung der einzelnen Haftklebemassen ermittelt. Für den Stanzprozess ist das Rückstellverhalten der orientierten Haftklebemassen essentiell, da dieses das Zusammenlaufen der Stanzprodukte verhindert. Daher wurde im folgenden nach Methode i) in Kombination mit Test B der Rückschrumpf im freien Film für die Haftklebebänder A bis V bestimmt. Die gemessenen Werte sind in Tabelle 1 zusammengefasst.

Tabelle 2 gibt einen Überblick über die Eigenschaften der beispielhaft für die Stanzung eingesetzten Materialien.

Die folgenden Beispiele geben eine Übersicht über die hergestellten Stanzlinge, die gewählten Stanzbedingungen und die dabei erhaltenen Ergebnisse die während oder nach dem Stanzprozeß in Abhängigkeit vom eingesetzten Klebeband beobachtet wurden Tabelle 3 gibt einen Überblick über die Bewertungskriterien zur Auswertung der Stanzversuche.

**Übersicht über die eingesetzten Stanzverfahren:**

<u>Flachbettstanze mit halbkontinuierlichem Abzug des Matrixgitters.</u>

Es wurde eine Flachbettstanze der Firma Melzer Maschinenbau GmbH (D-58332 Schwelm, Deutschland) eingesetzt. Die Rollenbreite der eingesetzten Klebematerialien betrug 130 mm. Die zukaschierten Trennmaterialien hatten eine Rollenbreite von 145 mm.

Die Stanzversuche mit doppelseitigen Klebebändern wurden so durchgeführt, dass auf dem Originaltrennmaterial (120 μm polyolefinisch (PE) beschichtetes Papier, beidseitig silikonisiert) angestanzt wurde ("kiss cut"-Verfahren). Vor dem Stanzprozeß wurde ein zweites silikonisiertes Hilfstrennmaterial von oben auf die offene klebende Seite des Versuchsklebebandes zukaschiert. Als Hilfstrennmaterial wurde dabei ein einseitig silikonisiertes Glassine Trennpapier eingesetzt. Die Strecke zwischen Stanzvorgang und Gitternetzabzug betrug 310 mm. Der Abzug erfolgte über ein Schwert mit einem Abzugswinkel von 135°. Die Stanzgeschwindigkeit lag bei 2200 Hüben/h.

Die Stanzversuche mit einseitig klebenden Klebebändern wurden so durchgeführt, dass auf einem silikonisiertes Hilfstrennmaterial angestanzt wurde ("kiss cut"-Verfahren). Vor dem Stanzprozeß wurde das Versuchsklebebandes zukaschiert. Als Hilfstrennmaterial wurde dabei ein einseitig silikonisiertes Glassine Trennpapier eingesetzt (Dicke 100 μm, Firma Laufenberg, Krefeld, Deutschland).

Die Strecke zwischen Stanzvorgang und Gitternetzabzug betrug 310 mm. Der Abzug erfolgte über ein Schwert mit einem Abzugswinkel von 135°. Die Stanzgeschwindigkeit lag bei 2200 Hüben/h.

<u>Flachbettstanze mit manuellem Abzug des Matrixgitters nach dem Stanzprozeß</u>

Es wurde eine Flachbettstanze der Firma Melzer Maschinenbau GmbH (D-58332 Schwelm, Deutschland) eingesetzt. Die Rollenbreite der eingesetzten Klebematerialien betrug 130 mm. Die zukaschierten Trennmaterialien hatten eine Rollenbreite von 145 mm.

Die Stanzversuche mit doppelseitigen Klebebändern wurden so durchgeführt, dass auf dem Originalltrennmaterial angestanzt wurde ("kiss cut"-Verfahren). Vor dem Stanzprozeß wurde ein zweites silikonisiertes Hilfstrennmaterial von oben auf die offene klebende Seite des Versuchsklebebandes zukaschiert. Als Hilfstrennmaterial wurde dabei ein einseitig silikonisiertes Glassine Trennpapier eingesetzt. Die Stanzgeschwindigkeit lag bei 2500 Hüben/h

Der Abzug des Gitternetzes erfolgte nicht während des Stanzprozesses. Das Gitternetz wurde nach 2 Wochen Lagerzeit der Muster manuell entfernt.

Die Stanzversuche mit einseitig klebenden Klebebändern wurden so durchgeführt, dass auf einem silikonisiertes Hüfstrennmaterial angestanzt wurde ("kiss cut"-Verfahren). Vor dem Stanzprozeß wurde das Versuchsklebebandes zukaschiert. Als Hilfstrennmaterial wurde dabei ein einseitig silikonisiertes Glassine Trennpapier eingesetzt (Dicke 100 μm, Firma Laufenberg, Krefeld, Deutschland).

Die Stanzgeschwindigkeit lag bei 2500 Hüben/h.

Der Abzug des Gitternetzes erfolgte nicht während des Stanzprozesses. Das Gitternetz wurde nach 2 Wochen Lagerzeit der Muster manuell entfernt.

## BEISPIELE

### Beispiel 1

**Zielprodukt:**

Quadratische Stanzlinge ohne Verbindungsstege abgedeckt mit silikonisiertem Trennmaterial 1 (Hilfstrennmaterial) auf einem silikonisierten Trägertrennmaterial 2 (Originaltrennmaterial). Der Durchmesser der Stanzlinge beträgt 14 mm von Spitze zu Spitze. Fig. 5 gibt eine Skizze derartiger Stanzlinge auf dem Trägermaterial (md = MD = machine direction). Ziffer 1 verweist hierbei auf die Stanzlinge, Ziffer 2 auf das Trägermaterial.

**Resultat**

Durch anisotrop orientierte Haftklebemassen können in allen Stanzverfahren deutliche Prozeßvorteile erreicht werden. Als Referenzprodukte wurden ebenfalls die entsprechenden Lösungsmittelprodukte gestanzt. Da die Hotmeltprodukte und die Lösemittelprodukte rezepturidentisch sind kann ein Rezeptureinfluß als Ursache der erheblich verbesserten Stanzfähigkeit, eindeutig ausgeschlossen werden.
Die Klebebänder T,U,V auf Lösemittelbasis sind aufgrund der weichen Haftklebemasse nur begrenzt stanzfähig. Die entsprechenden orientierten Hotmeltmuster J,K,L zeigen im Vergleich dazu eine hervorragende Stanzfähigkeit.
Tabelle 4 gibt einen Überblick über die gesamten Stanzergebnisse.
Als Vergleichsprodukt wurde weiterhin ein Klebeband der Firma 3M gestanzt. Das doppelseitige Klebeband "Scotch (TM) 9690 Laminating Adhesive" ergab vergleichbar schlechte Stanzergebnisse. Die Fehlerrate lag im vergleichbaren Bereich wie die Klebebänder auf Lösemittelbasis in Tabelle 4.

### Beispiel 2

**Zielprodukt**

Quadratische Stanzlinge ohne Verbindungsstege abgedeckt mit silikonisiertem Trennmaterial 1 (Hilfstrennmaterial) auf einem silikonisierten Trägertrennmaterial 2 (Originaltrennmaterial). Die Seitenkantenlänge eines Stanzlings beträgt 5 mm.
Fig. 6 gibt eine Skizze derartiger Stanzlinge auf dem Trägermaterial (md = MD = machine direction). Ziffer 1 verweist hierbei auf die Stanzlinge, Ziffer 2 auf das Trägermaterial.

**Resultate**

Tabelle 5 gibt einen Überblick über die Stanzergebnisse. Die orientierten Klebebänder weisen nur eine geringe, in den meisten Testversuchen keine Anzahl von Fehlstellen auf im Vergleich zu den Lösemittelmustern.
Die manuelle Entfernung des Stanzgitters muß in Maschinenrichtung erfolgen. Eine manuelle Abgitterung im rechten Winkel zur Maschinenrichtung führte zu vergleichbar schlechten Fehlerquoten wie bei den Lösemittelmustern.

### Beispiel 3

**Zielprodukt**

Kreisrunde Stanzlinge aus doppelseitig klebendem Material abgedeckt mit silikonisiertem Trennmaterial 1 (Hilfstrennmaterial) auf einem silikonisierten Trägertrennmaterial 2 (Originaltrennmaterial). Der Kreisdurchmesser der Stanzlinge beträgt 18 mm.
Fig. 7 gibt eine Skizze derartiger Stanzlinge auf dem Trägermaterial (md = MD = machine direction). Ziffer 1 verweist hierbei auf die Stanzlinge, Ziffer 2 auf das Trägermaterial.

**Resultate**

Die kreisrunden Stanzlinge zeichnen sich durch einen besonderen Schwierigkeitsgrad aus. Der durch die molekulare Verstreckung verursachte Rückschrumpfeffekt wirkt nur am oberen und unteren Kreisrand. Fig. 8 zeigt detailliert die Wirkung des Anisotropieeffektes am kreisrunden Stanzling. VR zeigt die Verstreckungsrichtung. Die Positionen 1 des Stanzlings zeigen Stellen ohne „kalten Fluß", also Stellen, in welchen der Rückschrumpf wirkt. Die Positionen 2 zeigen Bereiche, in denen die Haftklebemasse zurückgeflossen ist (starkes "Verbeißen"). Positionsziffer 3

verweist auf Übergangsbereiche.
Die Entfernung des Gitters funktionierte ohne Probleme, weil diese separierten Stellen im Entgitterungsprozeß als „Anfasser" wirken. Auch die manuelle Entfernung des Gitters nach 2 Wochen Lagerzeit funktionierte in Orientierungsrichtung ohne Probleme.
Tabelle 6 gibt einen Überblick über die Stanzergebnisse.

**Beispiel 4**

**Zielprodukte**

Quadratische Stanzlinge mit direkter Verbindungskante aus doppelseitig klebendem Material abgedeckt mit silikonisiertem Trennmaterial 1 (Hilfstrennmaterial) auf einem silikonisierten Trägertrennmaterial 2 (Originaltrennmaterial). Die Seitenkantenlänge eines Stanzlings beträgt 20 mm. Fig. 9 gibt eine Skizze derartiger Stanzlinge auf dem Trägermaterial (md = MD = machine direction). Ziffer 1 verweist hierbei auf die Stanzlinge, Ziffer 2 auf das Trägermaterial.
Die gestanzten Fertigprodukte wurden anschließend in einem automatischen Dispensergerät auf Dispensierfähigkeit untersucht. Als Dispensiergerät wurde das tesa Etikettiergerät "System 5/2" eingesetzt.

**Resultate**

Tabelle 7 gibt einen Überblick über die erhaltenen Ergebnisse. Anisotrop orientierte ein- oder doppelseitige Klebebänder zeigten deutliche Vorteile im Spendeverhalten. In den Dispensierversuchen sollte jeweils ein selbstklebendes Stanzteil auf eine Faltschachtel aus Papier übertragen werden. Die Stanzformteile wurden dazu mit dem Trägermaterial über eine scharfe 90° Kante gezogen. Alle Stanzteile mit anisotroper orientierter Haftklebemasse zeigten im Bereich der gemeinsamen Berührungskante keine Fließeffekte. Die Stanzteile ließen sich ohne Probleme an der Spendekante ablösen und vereinzeln und zogen keine nachfolgenden Stanzteile mit.
Die Klebebänder auf Basis der Lösemitteltechnologie zeigen starke Fließeffekte an der gemeinsamen Berührungskante. Je weicher die erprobte Haftklebemasse war, desto mehr Probleme traten im Spendeprozeß auf.
Ein ebenfalls erprobtes Produkt der Firma 3M ("Scotch (TM) 9690 Laminating Adhesive") zeigte auch kein fehlerfreies Spendeverhalten. Teilweise wurden in einem Ablösevorgang bis zu vier Stanzlinge übertragen.

**Beispiel 5**

In weiteren Stanzversuchen wurde die Verunreinigung der Stanzmesser in Abhängigkeit des eingesetzten Klebebandes untersucht. Die Versuche wurden mit jeweils 20000 Laufmeter Versuchsmaterial durchgeführt. Danach erfolgte eine qualitative Beurteilung der Stanzmesser. Tabelle 8 gibt einen Überblick über die Ergebnisse.

**Resultat**

Anisotrop orientierte Haftklebemassen zeigen im Vergleich zu nicht orientierten Haftklebemassen eine deutliche geringere Tendenz die eingesetzten Stanzmesser zu verschmutzen. Durch das reduzierte Auffließverhalten in Maschinenrichtung der anisotrop orientierten Haftklebemassen wird die Kontaktzeit zwischen Stanzmesser und Haftklebemasse reduziert. Die Stanzmesser verschmutzen weniger und haben eine deutlich längere Standzeit. Verstärkt wird dieser günstige Effekt auch durch die Rückstellkraft der anisotrop orientierten Haftklebemassen. Anhaftende Haftkleberreste auf den Stanzmessern werden während des Stanzvorgangs vom Stanzmesser durch den Rückschrumpf abgelöst.
Im Vergleich wurde auch ein Produkt der Firma 3M mitgestanzt. Das doppelseitige Klebeband "Scotch (TM) 9690 Laminating Adhesive" zeigte eine vergleichbare Verschmutzungstendenz wie die untersuchten Lösemittelmuster.
Fig. 1 zeigt eine mikroskopische Vergrößerung einer Kante eines Stanzlings nach dem Stanzprozeß. Man erkennt die durch anisotrope Orientierung verursachte Rückstellung der Haftklebemasse. Der Rückschrumpf im freien Film nach Testmethode B betrug in diesem Fall 91 %.

Tabelle 1. Übersicht ermittelte Rückschrumpfwerte im freien Film (Test B).

| Haftklebemasse für Haftklebeband | Rückschrumpf im freien Film Test B |
|---|---|
| A | 66 % |
| B | 72 % |
| C | 66 % |

(fortgesetzt)

| Haftklebemasse für Haftklebeband | Rückschrumpf im freien Film Test B |
|---|---|
| D | 56 % |
| E | 62 % |
| F | 63 % |
| G | 68 % |
| H | 63 % |
| I | 50 % |
| J | 59 % |
| K | 66 % |
| L | 59 % |
| M | 0 % |
| N | 0 % |
| O | 0 % |
| P | 0 % |
| R | 0 % |
| S | 0 % |
| T | 0 % |
| U | 0 % |
| V | 0 % |

**Tabelle 2**. Übersicht über die ein- und doppelseitigen Klebebänder, die in den Stanzversuchen eingesetzt wurden. Die Tabelle zeigt den Produktaufbau und das Herstellungsverfahren und die Vernetzungsart, welche zur Herstellung des Klebebandes eingesetzt wurde. Als Trägerfolie wurde ein 12 μm dicke PET-Folie der Firma SKC, Korea, eingesetzt.

| **Klebeband** | **Eingesetzte Vernetzungsmethode für die Haftklebemasse** | **Herstellungsverfahren für das Klebebandes** | **Produktaufbau** | | | |
|---|---|---|---|---|---|---|
| | | | **Masseauftrag: offene Seite** | **Masseauftrag: abgedeckte Seite** | **Trägerfolie** | **Trennmaterial** |
| **A** | ESH | Hotmeltbeschichtung | 100 $g/m^2$ | 100 $g/m^2$ | 12 μm PET | 120 μm polyolefinisch (PE) beschichtetes Papier, beidseitig silikonisiert |
| **B** | ESH | Hotmeltbeschichtung | 50 $g/m^2$ | 50 $g/m^2$ | -,,- | -,,- |
| **C** | ESH | Hotmeltbeschichtung | 100 $g/m^2$ (einseitig beschichtet) | x | -,,- | 100 μm -Glassin-Trennpapier, einseitig silikonisiert |
| **D** | UV | Hotmeltbeschichtung | 100 $g/m^2$ | 100 $g/m^2$ | -,,- | 120 μm polyolefinisch (PE) beschichtetes Papier, beidseitig silikonisiert |
| **E** | UV | Hotmeitbeschichtung | 50 $g/m^2$ | 50 $g/m^2$ | -,,- | -,,- |
| **F** | ESH | Hotmeltbeschichtung | 100 $g/m^2$ | 100 $g/m^2$ | 12 μm PET | 120 μm polyolefinisch (PE) beschichtetes Papier, beidseitig silikonisiert |
| **G** | ESH | Hotmeltbeschichtung | 50$g/m^2$ | 50 $g/m^2$ | -,,- | -,,- |
| **H** | ESH | Hotmeltbeschichtung | 100 $g/m^2$ (einseitig beschichtet) | x | -,,- | 100 μm -Glassin-Trennpapier, einseitig silikonisiert |

(fortgesetzt)

| Klebeband | Eingesetzte Vernetzungsmethode für die Haftklebemasse | Herstellungsverfahren für das Klebebandes | Produktaufbau | | | |
|---|---|---|---|---|---|---|
| | | | Masseauftrag: offene Seite | Masseauftrag: abgedeckte Seite | Trägerfolie | Trennmaterial |
| **I** | UV | Hotmeltbeschichtung | 50 g/m$^2$ | 50 g/m$^2$ | -,,- | 120 µm polyolefinisch (PE) beschichtetes Papier, beidseitig silikonisiert |
| **J** | ESH | Hotmeltbeschichtung | 100 g/m$^2$ | 100 g/m$^2$ | 12 µm PET | 120 µm polyolefinisch (PE) beschichtetes Papier, beidseitig silikonisiert |
| **K** | ESH | Hotmeltbeschichtung | 50g/m$^2$ | 50 g/m$^2$ | -,,- | -,,- |
| **L** | ESH | Hotmeltbeschichtung | 100 g/m$^2$ (einseitig beschichtet) | x | -,,- | 100 µm-Glassin-Trennpapier, einseitig silikonisiert |
| **M** | ESH | Lösungsmittelbeschichtung | 100 g/m$^2$ | 100 g/m$^2$ | 12 µm PET | 120 µm polyolefinisch (PE) beschichtetes Papier, beidseitig silikonisiert |
| **N** | ESH | Lösungsmittelbeschichtung | 50 g/m$^2$ | 50 g/m$^2$ | -,,- | -,,- |
| **O** | ESH | Lösungsmittelbeschichtung | 100 g/m$^2$ (einseitig beschichtet) | x | -,,- | 100 µm -Glassin-Trenneinseitig silikonisiert |
| **P** | ESH | Lösungsmittelbeschichtund | 100 g/m$^2$ | 100 g/m$^2$ | 12 µm PET | 120 µm polyolefinisch (PE) beschichtetes Papier, beidseitig silikonislert |

(fortgesetzt)

| Klebeband | Eingesetzte Vernetzungsmethode für die Haftklebemasse | Herstellungsverfahren für das Klebebandes | Produktaufbau | | | |
|---|---|---|---|---|---|---|
| | | | Masseauftrag: offene Seite | Masseauftrag: abgedeckte Seite | Trägerfolie | Trennmaterial |
| R | ESH | Lösungsmittelbeschichtung | 50 $g/m^2$ | 50 $g/m^2$ | -,,- | -,,- |
| S | ESH | Lösungsmittelbeschichtung | 100 $g/m^2$ (einseitig beschichtet) | x | -,,- | 100 µm -Glassin-Trennpapier, einseitig silikonisiert |
| T | ESH | Lösungsmittelbeschichtung | 100 $g/m^2$ | 100 $g/m^2$ | 12 µm PET | 120 µm polyolefinisch (PE) beschichtetes Papier, beidseitig silikonisiert |
| U | ESH | Lösungsmittelbeschichtung | 50 $g/m^2$ | 50 $g/m^2$ | -,,- | -,,- |
| V | ESH | Lösungsmittelbeschichtung | 100 $g/m^2$ (einseitig beschichtet) | x | -,,- | 100 µm -Glassin-Trennpapier, einseitig silikonisiert |

**Tabelle 3.** Kriterien zur Beurteilung der Fehlerhäufigkeit bei den Stanzversuchen.

| Fehlerquote | Bewertung |
|---|---|
| **0 %** | Das Matrixgitter konnte problemlos entfernt werden. In Stanzversuchen über 250 Laufmeter tritt keine einzige Fehlstelle auf, d.h. es wurde kein Stanzling beim Abgitterungsprozeß mitgerissen. |
| **1 - 99 %** | Prozentuale Anzahl von Fehlstellen (fehlende Stanzlinge) über 250 Laufmeter. Die Fehlerquote wird auf die Gesamtanzahl der möglichen Stanzlinge über 250 Laufmeter des Versuchsklebebands bezogen. |
| **100 %** | Matrixgitter konnte nicht von den Stanzlingen getrennt werden. Keine vereinzelten Stanzlinge über 250 Laufmeter. |

**Tabelle 4.** Übersicht über die eingesetzten Versuchsklebebänder und die Stanzergebnisse im Beispiel 1. Tabelle 3 gibt einen Überblick über die dabei angewendeten Beurteilungskriterien.

| **Klebeband** | **Stanzverfahre** | |
|---|---|---|
| | Flachbettstanze mit halbkontinuierlichem Abzug des Matrixgitters | Flachbettstanze mit manuellem Abzug des Matrixgitters nach dem Stanzprozeß |
| **A** | 0 % | 0 % |
| **B** | 0 % | 0 % |
| **C** | 0 % | 0 % |
| **D** | 0 % | 0 % |
| **E** | 0 % | 0 % |
| **F** | 0 % | 0 % |
| **G** | 0 % | 0 % |
| **H** | 0 % | 0 % |
| **I** | 0 % | 0 % |
| **J** | 0 % | 8 % |
| **K** | 0 % | 5 % |
| **L** | 0 % | 4 % |
| **M** | 51 % | 100 % |
| **N** | 47 % | 100 % |
| **O** | 23 % | 100 % |
| **P** | 85 % | 100 % |
| **R** | 71 % | 100 % |
| **S** | 69 % | 100 % |
| **T** | 92 % | 100 % |
| **U** | 62 % | 100 % |
| **V** | 51 % | 100 % |
| **3M 9690®** | 64 % | 100 % |

**Tabelle 5**. Übersicht über die eingesetzten Versuchsklebebänder und die Stanzergebnisse im Beispiel 2. Die Beurteilungskriterien sind in Tabelle 3 dargestellt.

| Klebeband | Stanzverfahren | |
|---|---|---|
| | Flachbettstanze mit halbkontinuierlichem Abzug des Matrixgitters | Flachbettstanze mit manuellem Abzug des Matrixgitters nach dem Stanzprozeß |
| **F** | 0 % | 0 % |
| **G** | 0 % | 0 % |
| **J** | 0 % | 3 % |
| **K** | 0 % | 0 % |
| **P** | 37 % | 81 % |
| **R** | 28 % | 67 % |
| **T** | 87 % | 86 % |
| **U** | 75 % | 51 % |

**Tabelle 6**. Übersicht über die eingesetzten Versuchsklebebänder und die Stanzergebnisse im Beispiel 3. Die Beurteilungskriterien sind in Tabelle 3 dargestellt.

| Klebeband | Stanzverfahren | |
|---|---|---|
| | Flachbettstanze mit halbkontinuierlichem Abzug des Matrixgitters | Flachbettstanze mit manuellem Abzug des Matrixgitters nach dem Stanzprozeß |
| **F** | 0 % | 1 % |
| **G** | 0 % | 0 % |
| **J** | 0 % | 3 % |
| **K** | 0 % | 0 % |
| **P** | 34 % | 100 % |
| **R** | 31 % | 100 % |
| **T** | 79 % | 100 % |
| **U** | 64 % | 100 % |

**Tabelle 7**. Übersicht über die eingesetzten Versuchsklebebänder und die Stanzergebnisse im Beispiel 4. Die Beurteilungskriterien sind in Tabelle 3 dargestellt.

| Klebeband | Stanzverfahren | Beurteilung der Dispensiereigenschaften |
|---|---|---|
| **J**<br>Hotmeltverfahren | Flachbettstanze mit halbkontinuierlichem Abzug des Matrixgitters | Stanzlinge lassen sich ohne Verluste über 250 Laufmeter spenden |
| **T**<br>**(Vergleichsmuster zu J)**<br>Lösungsmittelverfahren | | Stanzlinge lassen sich teilweise nicht vereinzeln. Es erfolgt ein Übertrag von 2 zusammenhängenden Stanzlingen auf das Spendeobjekt. |
| **F**<br>Hotmeltverfahren | | Stanzlinge lassen sich ohne Verluste über 250 Laufmeter spenden |
| **P**<br>**(Vergleichsmuster zu F)**<br>Lösungsmittelverfahren | | Stanzlinge lassen sich teilweise nicht vereinzeln. Es erfolgt ein Übertrag von 2 zusammenhängenden Stanzlingen auf das Spendeobjekt. |
| **L**<br>Hotmeltverfahren | | Stanzlinge lassen sich ohne Verluste über 250 Laufmeter spenden |
| **V**<br>**(Vergleichsmuster zu L)**<br>Lösungsmittelverfahren | | Stanzlinge lassen sich teilweise nicht vereinzeln. Es erfolgt ein Übertrag von 2 zusammenhängenden Stanzlingen auf das Spendeobjekt. |
| **3M 9690** | | Stanzlinge lassen sich teilweise nicht vereinzeln. Es erfolgt ein Übertrag von bis zu 4 zusammenhängenden Stanzlingen auf das Spendeobjekt. |

**Tabelle 8**. Ergebnisse zur Verschmutzung der Stanzmesser.

| Klebeband | Herstellverfahren | Beurteilung der Verschmutzung der Stanzmesser |
|---|---|---|
| **J** | Hotmeltverfahren | Geringe Verunreinigung der Stanzmesser mit Haftklebemasse |
| **T**<br>**(Vergleichsmuster zu J)** | Lösungsmittelverfahren | Ausgeprägte Verunreinigung der Stanzmesser mit Haftklebemasse |
| **F** | Hotmeltverfahren | Keine Verunreinigung der Stanzmesser mit Haftklebemasse |
| **P**<br>**(Vergleichsmuster zu F)** | Lösungsmittelverfahren | Starke Verunreinigung der Stanzmesser mit Haftklebemasse |
| **3M 9690** | | Ausgeprägte Verunreinigung der Stanzmesser mit Haftklebemasse |

## Patentansprüche

**1.** Verfahren zur Herstellung von haftklebrigen Stanzlingen aus mit Haftklebemasse ausgerüstetem Trägermaterial, **dadurch gekennzeichnet, daß**

- als Haftklebemasse eine solche eingesetzt wird, die derart orientiert ist, daß sie eine Vorzugsrichtung besitzt,
- der Stanzprozeß diskontinuierlich durchgeführt wird.

**2.** Verfahren nach Anspruch 1, **dadurch gekennzeichnet, daß** der Stanzprozeß unter Verwendung einer Flachbettstanze erfolgt.

3. Verfahren nach zumindest einem der vorangehenden Ansprüche, **dadurch gekennzeichnet, daß** die orientierte Haftklebemasse ein Rückschrumpfverhalten aufweist, wobei der Rückschrumpf über eine Bestimmung nach Test B (Rückschrumpfmessung im freien Film) mindestens 3 % beträgt.

4. Verfahren nach zumindest einem der vorangehenden Ansprüche, **dadurch gekennzeichnet, daß** der in Vorzugsrichtung gemessene Brechungsindex $n_{VR}$ größer ist als der in einer Richtung senkrecht zur Vorzugsrichtung gemessene Brechungsindex $n_{SR}$.

5. Verfahren nach Anspruch 4, **dadurch gekennzeichnet, daß** die Differenz $\Delta n = n_{VR} - n_{SR}$ mindestens $1 \cdot 10^{-5}$ beträgt.

6. Verfahren nach zumindest einem der vorangehenden Ansprüche, **dadurch gekennzeichnet, daß** als Haftklebemasse eine solche auf Polyacrylat- und/oder Polymethacrylatbasis eingesetzt wird.

7. Verfahren nach zumindest einem der vorangehenden Ansprüche, **dadurch gekennzeichnet, daß** es sich bei dem mit Haftklebemasse ausgerüsteten Trägermaterial um ein ein- oder doppelseitiges Klebeband mit zumindest einem Permanentträger handelt.

8. Verfahren nach zumindest einem der Ansprüche 1 bis 6, **dadurch gekennzeichnet, daß** es sich bei dem mit Haftklebemasse ausgerüsteten Trägermaterial um einen temporären Träger handelt, auf den das zu stanzende Material reversibel aufgelegt ist.

9. Verfahren nach zumindest einem der vorangehenden Ansprüche, **dadurch gekennzeichnet, daß** der Stanzprozeß die Haftklebemasse auf dem Trägermaterial vollständig durchtrennt.

10. Verfahren nach zumindest einem der Ansprüche 1 bis 8, **dadurch gekennzeichnet, daß** der Stanzprozeß die Haftklebemasse auf dem Trägermaterial nicht vollständig durchtrennt.

11. Verfahren nach zumindest einem der vorangehenden Ansprüche, **dadurch gekennzeichnet, daß** der Stanzprozeß das mit Haftklebemasse ausgerüstete Trägermaterial vollständig durchtrennt.

12. Verfahren nach zumindest einem der Ansprüche 1 bis 10, **dadurch gekennzeichnet, daß** der Stanzprozeß das mit Haftklebemasse ausgerüstete Trägermaterial nicht oder nur teilweise durchtrennt.

## Claims

1. Process for producing pressure-sensitively adhesive punched products from backing material coated with pressure sensitive adhesive, **characterized in that**

   - said pressure sensitive adhesive is oriented such that it possesses a preferential direction and,
   - the punching process is carried out batchwise.

2. Process according to claim 1, **characterized in that** the punching process takes place using a rotary punch.

3. Process according to at least one of the preceding claims, **characterized in that** the oriented pressure sensitive adhesive exhibits shrinkback, the shrinkback as determined by test B (shrinkback measurement in the free film) is at least 3%.

4. Process according to at least one of the preceding claims, **characterized in that** the refractive index measured in the preferential direction, $n_{VR}$, is greater than the refractive index measured in a direction perpendicular to the preferential direction, $n_{SR}$.

5. Process according to claim 4, **characterized in that** the difference $\Delta n = n_{VR} - n_{SR}$ is at least $1 \cdot 10^{-5}$.

6. Process according to at least one of the preceding claims, **characterized in that** said pressure sensitive adhesive is based on polyacrylate and/or polymethacrylate.

**7.** Process according to at least one of the preceding claims, **characterized in that** said backing material coated with pressure sensitive adhesive is a single-sided or double-sided adhesive tape with at least one permanent backing.

**8.** Process according to at least one of claims 1 to 6, **characterized in that** said backing material coated with pressure sensitive adhesive is a temporary support on which the material to be punched is reversibly placed.

**9.** Process according to at least one of the preceding claims, **characterized in that** the punching process completely severs the pressure sensitive adhesive on the backing material.

**10.** Process according to at least one of claims 1 to 8, **characterized in that** the punching process does not completely sever the pressure sensitive adhesive on the backing material.

**11.** Process according to at least one of the preceding claims, **characterized in that** the punching process completely severs the backing material coated with pressure sensitive adhesive.

**12.** Process according to at least one of claims 1 to 10, **characterized in that** the punching process does not sever, or only partly severs, the backing material coated with pressure sensitive adhesive.

## Revendications

**1.** Procédé de production d'articles découpés autoadhésifs à partir d'un matériau de support garni de masse autoadhésive, **caractérisé en ce que**

- l'on met en oeuvre en tant que masse autoadhésive une masse autoadhésive orientée de manière à posséder une direction prédominante,
- le processus de découpage est entrepris en mode discontinu.

**2.** Procédé suivant la revendication 1, **caractérisé en ce que** le processus de découpage se fait par un découpage à plat.

**3.** Procédé suivant au moins l'une quelconque des revendications qui précèdent, **caractérisé en ce que** la masse autoadhésive orientée présente un comportement de retrait, le retrait, selon une détermination par le test B (mesure du retrait sur film libre) étant d'au moins 3%.

**4.** Procédé suivant au moins l'une quelconque des revendications qui précèdent, **caractérisé en ce que** l'indice de réfraction $\eta_{VR}$ mesuré dans la direction prédominante est supérieur à l'indice de réfraction $\eta_{SR}$ mesuré dans une direction perpendiculaire à la direction prédominante.

**5.** Procédé suivant la revendication 4, **caractérisé en ce que** la différence $\Delta\eta = \eta_{VR} - \eta_{SR}$ est d'au moins $1.10^{-5}$.

**6.** Procédé suivant au moins l'une quelconque des revendications qui précèdent, **caractérisé en ce que** l'on met en oeuvre en tant que masse autoadhésive une masse autoadhésive à base de polyacrylate et/ou de polyméthacrylate.

**7.** Procédé suivant au moins l'une quelconque des revendications qui précèdent, **caractérisé en ce que** le matériau de support garni de masse autoadhésive est une bande adhésive simple ou double face comportant au moins un support permanent.

**8.** Procédé suivant au moins l'une quelconque des revendications 1 à 6, **caractérisé en ce que** le matériau de support garni de masse autoadhésive est un support temporaire, qui peut être appliqué de manière réversible sur le matériau à découper.

**9.** Procédé suivant au moins l'une quelconque des revendications qui précèdent, **caractérisé en ce que** le processus de découpage sectionne totalement la masse autoadhésive sur le matériau de support.

**10.** Procédé suivant au moins l'une quelconque des revendications 1 à 8, **caractérisé en ce que** le processus de découpage ne sectionne pas totalement la masse autoadhésive sur le matériau de support.

**11.** Procédé suivant au moins l'une quelconque des revendications qui précèdent, **caractérisé en ce que** le processus de découpage sectionne totalement le matériau de support garni de masse autoadhésive.

**12.** Procédé suivant au moins l'une quelconque des revendications 1 à 10, **caractérisé en ce que** le processus de découpage ne sectionne pas ou seulement partiellement le matériau de support garni de masse autoadhésive.

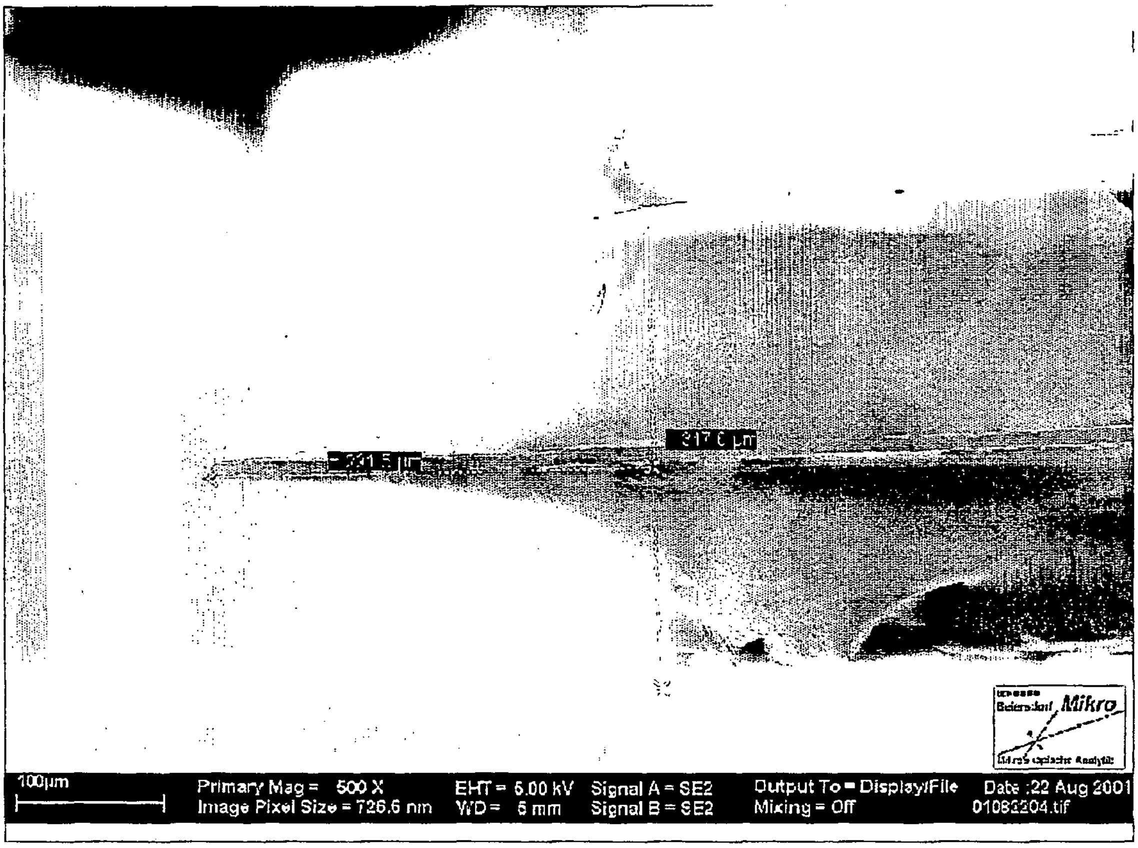
100µm
Primary Mag = 500 X
Image Pixel Size = 726.6 nm
EHT = 5.00 kV
WD = 5 mm
Signal A = SE2
Signal B = SE2
Output To = Display/File
Mixing = Off
Date :22 Aug 2001
Mikro

Fig. 1

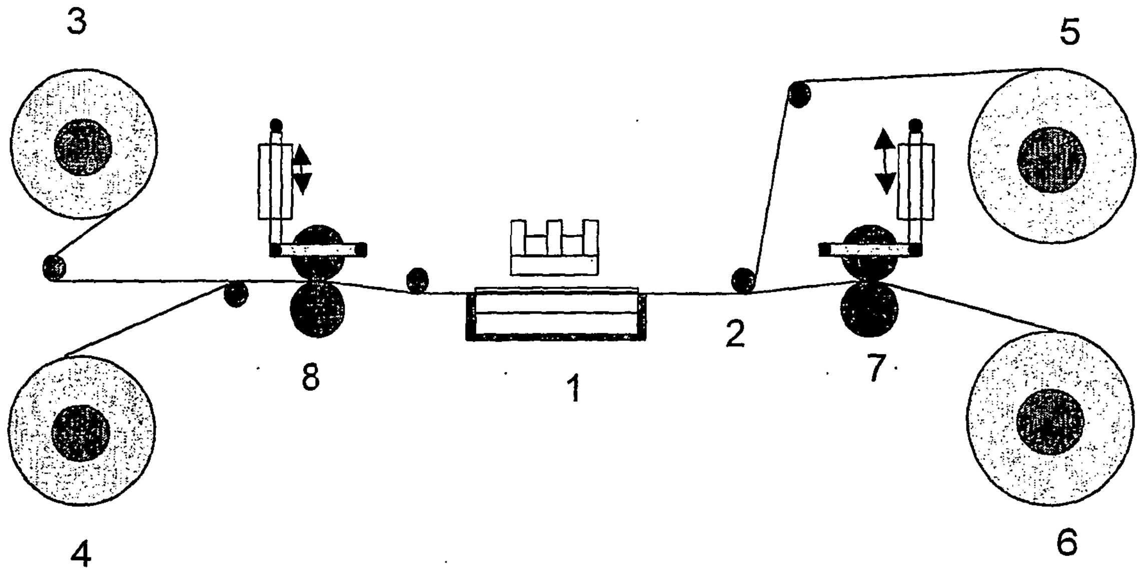


Fig. 2

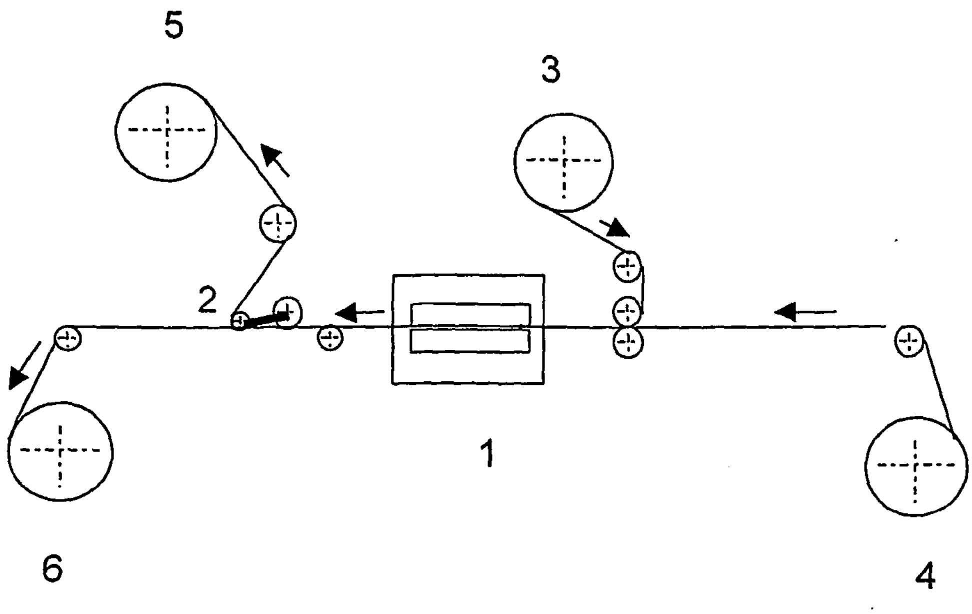


Fig. 3

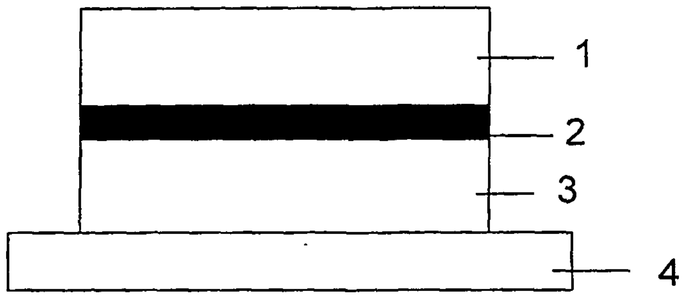


Fig. 4

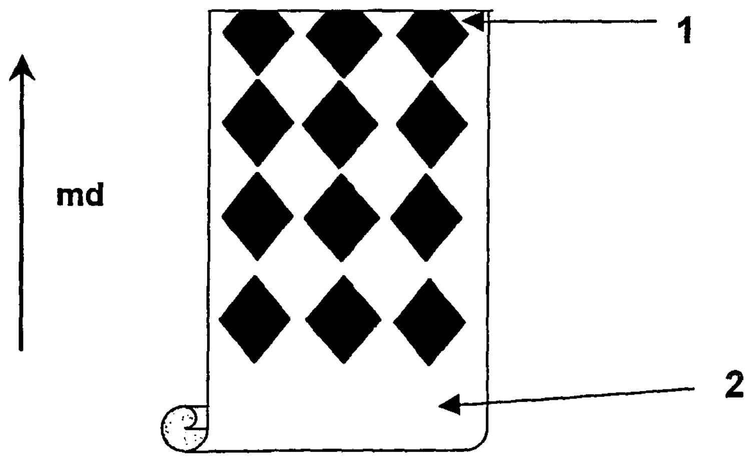


Fig. 5

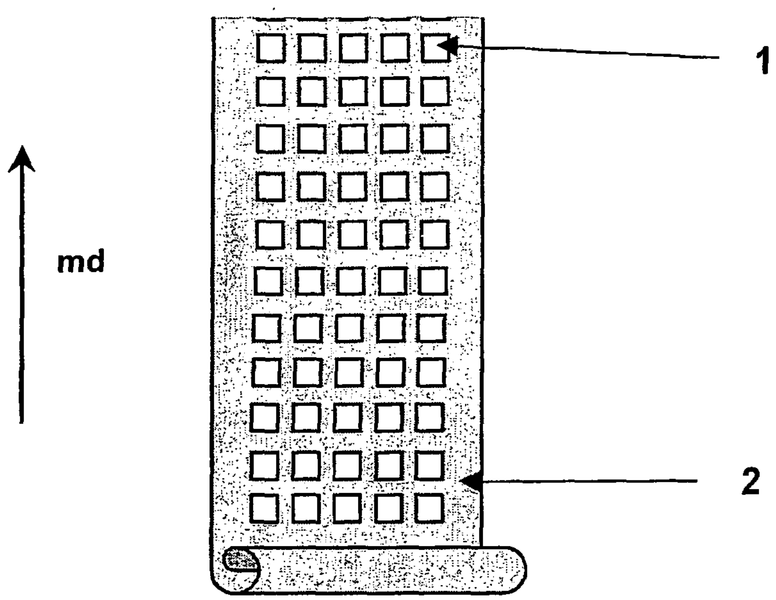


Fig. 6

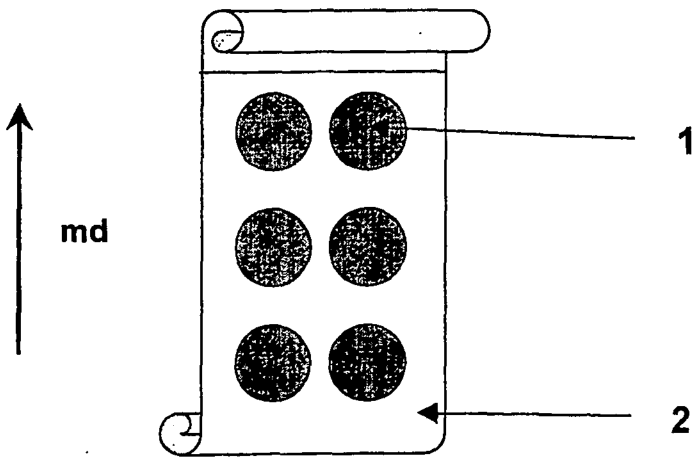


Fig. 7

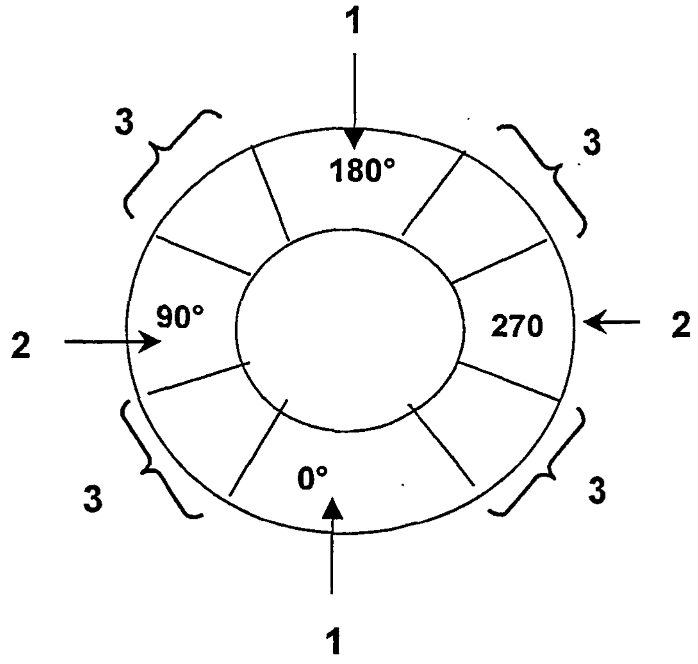


Fig. 8

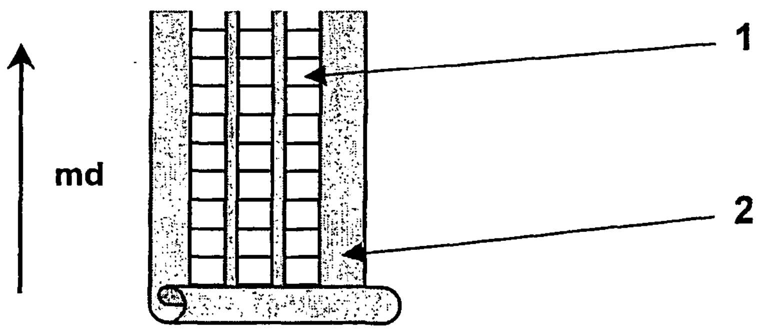


Fig. 9